# EUROPEAN PATENT SPECIFICATION

(11) **EP 4 428 647 B1**
(45) Date of publication and mention of the grant of the patent: **28.01.2026**
(21) Application number: 24159451.4
(22) Date of filing: 23.02.2024
(51) Int. Cl.: G05D 1/248, G05D 1/646, G05D 107/20, G05D 109/10, G05D 111/10, G05D 111/20, G05D 1/242

(54) **AUTOMATIC TRAVELING METHOD, AUTOMATIC TRAVELING PROGRAM, AUTOMATIC TRAVELING SYSTEM, AND WORK VEHICLE**
AUTOMATISCHES FAHRVERFAHREN, AUTOMATISCHES FAHRPROGRAMM, AUTOMATISCHES FAHRSYSTEM UND ARBEITSFAHRZEUG
PROCÉDÉ DE DÉPLACEMENT AUTOMATIQUE, PROGRAMME DE DÉPLACEMENT AUTOMATIQUE, SYSTÈME DE DÉPLACEMENT AUTOMATIQUE ET VÉHICULE DE TRAVAIL

(30) Priority: 10.03.2023 JP 2023037163
(43) Date of publication of application: 11.09.2024
(73) Proprietor: Yanmar Holdings Co., Ltd., Osaka-shi, Osaka (JP)
(72) Inventor: KANO, Tomohisa, Osaka (JP); HOMMA, Terasu, Osaka (JP)
(74) Representative: Novagraaf International SA

(56) References cited:
- EP-A1- 4 099 125
- US-A1- 2017 108 870
- US-A1- 2022 251 809

## Description

### TECHNICAL FIELD

The present invention relates to a technique for causing a work vehicle to automatically travel along a target route in a work field.

### BACKGROUND ART

A work vehicle that travels automatically on a target route while spraying a chemical solution on crops planted in a work field such as a field or farm are known (see, for example, Patent Document 1). The work vehicle sprays the chemical solution in left and right directions in a plurality of work routes while automatically traveling in sequence along the work routes where the crops are planted. US2017108870A1 relates to determining variance factors for complex road segments. US2022251809A1 relates to autonomous mine vehicle operations, and in particular to autonomous operations modes of such vehicles. EP4099125A1 relates to an automatic traveling method, an automatic traveling system, and an automatic traveling program.

### PRIOR ART DOCUMENT

### PATENT DOCUMENT

Patent Document 1: Japanese Unexamined Patent Application Publication No. 2021-000021

### SUMMARY OF INVENTION

### TECHNICAL PROBLEM

The work vehicle has a function of performing a correction operation for correcting the position or azimuth of the work vehicle when a positional deviation (positional shift) or an azimuth deviation (azimuth shift) with respect to the target route exceeds a threshold (allowable value) so as not to collide with crops during automatic traveling. For example, when the state of the field is not good or when the field is inclined, the positional deviation or the azimuth deviation frequently exceeds the threshold in the conventional work vehicle, causing the correction operation to be repeatedly executed. This leads to a decreased work efficiency of the work by the work vehicle.

An object of the present invention is to provide an automatic traveling method, an automatic traveling program, an automatic traveling system, and a work vehicle, which can enhance the work efficiency of work by an automatically traveling work vehicle.

### SOLUTION TO PROBLEM

An automatic traveling method according to the present invention includes causing a work vehicle to automatically travel along a target route in a work field, and executing a correction operation of correcting a deviation using a shift amount of the work vehicle generated in a previous correction operation when the deviation which includes at least a positional deviation or an azimuth deviation of the work vehicle with respect to the target route exceeds a threshold.

An automatic traveling program according to the present invention causes one or more processors to execute the automatic traveling method.

An automatic traveling system according to the present invention includes a travel processing unit and a correction processing unit. The travel processing unit causes a work vehicle to automatically travel along a target route in a work field. The correction processing unit executes a correction operation of correcting a deviation using a shift amount of the work vehicle generated in the past correction operation when the deviation which includes at least a positional deviation or an azimuth deviation of the work vehicle with respect to the target route exceeds a threshold.

A work vehicle according to the present invention includes the automatic traveling system and a traveling device controlled by the automatic traveling system.

### ADVANTAGEOUS EFFECTS OF INVENTION

According to the present invention, the automatic traveling method, the automatic travel program, an automatic traveling system, and a work vehicle, which can enhance work efficiency of the work performed by an automatically traveling work vehicle can be provided.

### BRIEF DESCRIPTION OF DRAWINGS

FIG. 1 is a schematic view illustrating an overall structure of an automatic traveling system according to an embodiment of the present invention.
FIG. 2 is a block diagram illustrating a configuration of the automatic traveling system according to the embodiment of the present invention.
FIG. 3 is an external view of a work vehicle according to the embodiment of the present invention when seen from the left front side.
FIG. 4A is an external view of the left side surface of the work vehicle according to the embodiment of the present invention when seen from the left side.
FIG. 4B is an external view of the right side surface of the work vehicle according to the embodiment of the present invention when seen from the right side.
FIG. 4C is an external view of the back side of the work vehicle according to the embodiment of the present invention when seen from the back side.
FIG. 5 illustrates an example of crop rows according to the embodiment of the present invention.
FIG. 6 illustrates an example of a target route according to the embodiment of the present invention.
FIG. 7A is a view for explaining a method for generating the target route according to the embodiment of the present invention.
FIG. 7B is a view for explaining the method for generating the target route according to the embodiment of the present invention.
FIG. 8 illustrates a travel route of the work vehicle according to the embodiment of the present invention.
FIG. 9 illustrates an example of a positional deviation and an azimuth deviation of the work vehicle according to the embodiment of the present invention.
FIG. 10 illustrates an example of a correction operation executed by a conventional work vehicle.
FIG. 11 illustrates an example of the correction operation executed by the work vehicle according to the embodiment of the present invention.
FIG. 12 is a table showing an example of control information used in the automatic traveling system according to the embodiment of the present invention.
FIG. 13 illustrates an example of a spraying work method by the work vehicle according to the embodiment of the present invention.
FIG. 14 is a flowchart illustrating an example of a procedure of automatic travel processing executed by an automatic traveling system according to the embodiment of the present invention.
FIG. 15A illustrates a specific example of the correction operation according to the embodiment of the present invention.
FIG. 15B illustrates a specific example of the correction operation according to the embodiment of the present invention.
FIG. 15C illustrates a specific example of the correction operation according to the embodiment of the present invention.
FIG. 15D illustrates a specific example of the correction operation according to the embodiment of the present invention.
FIG. 16A illustrates a specific example of deviation information stored in the correction operation according to the embodiment of the present invention.
FIG. 16B illustrates a specific example of the deviation information stored in the correction operation according to the embodiment of the present invention.
FIG. 16C illustrates a specific example of the deviation information stored in the correction operation according to the embodiment of the present invention.
FIG. 16D illustrates a specific example of the deviation information stored in the correction operation according to the embodiment of the present invention.
FIG. 17A illustrates a specific example of the correction operation according to the embodiment of the present invention.
FIG. 17B illustrates a specific example of the correction operation according to the embodiment of the present invention.
FIG. 17C illustrates a specific example of the correction operation according to the embodiment of the present invention.
FIG. 17D illustrates a specific example of the correction operation according to the embodiment of the present invention.
FIG. 17E illustrates a specific example of the correction operation according to the embodiment of the present invention.
FIG. 18A illustrates a specific example of an obstacle determination area according to the embodiment of the present invention.
FIG. 18B illustrates a specific example of the obstacle determination area according to the embodiment of the present invention.
FIG. 18C illustrates a specific example of the obstacle determination area according to the embodiment of the present invention.
FIG. 18D illustrates a specific example of the obstacle determination area according to the embodiment of the present invention.
FIG. 18E illustrates a specific example of the obstacle determination area according to the embodiment of the present invention.
FIG. 18F illustrates a concrete example of the obstacle determination area according to the embodiment of the present invention.
FIG. 19 illustrates an example of an obstacle determination method by the work vehicle according to the embodiment of the present invention.
FIG. 20 illustrates an example of an obstacle determination method by the work vehicle according to the embodiment of the present invention.

### DESCRIPTION OF EMBODIMENTS

The following embodiments are examples embodying the present invention, and are not intended to limit the technical scope of the present invention.

### Automatic Traveling System 1

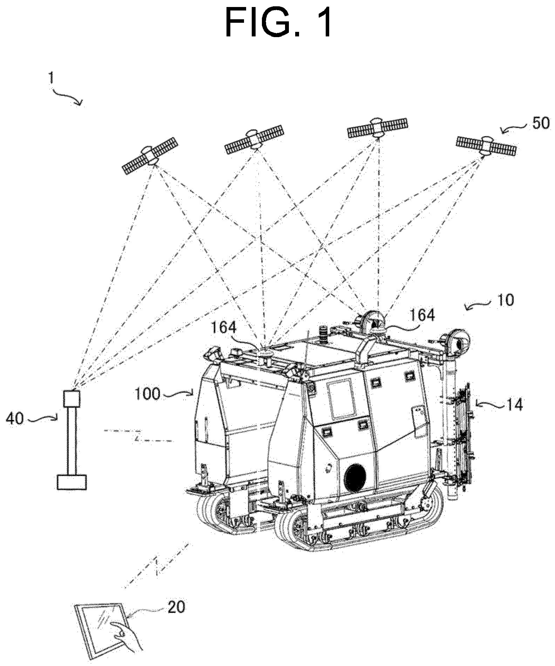

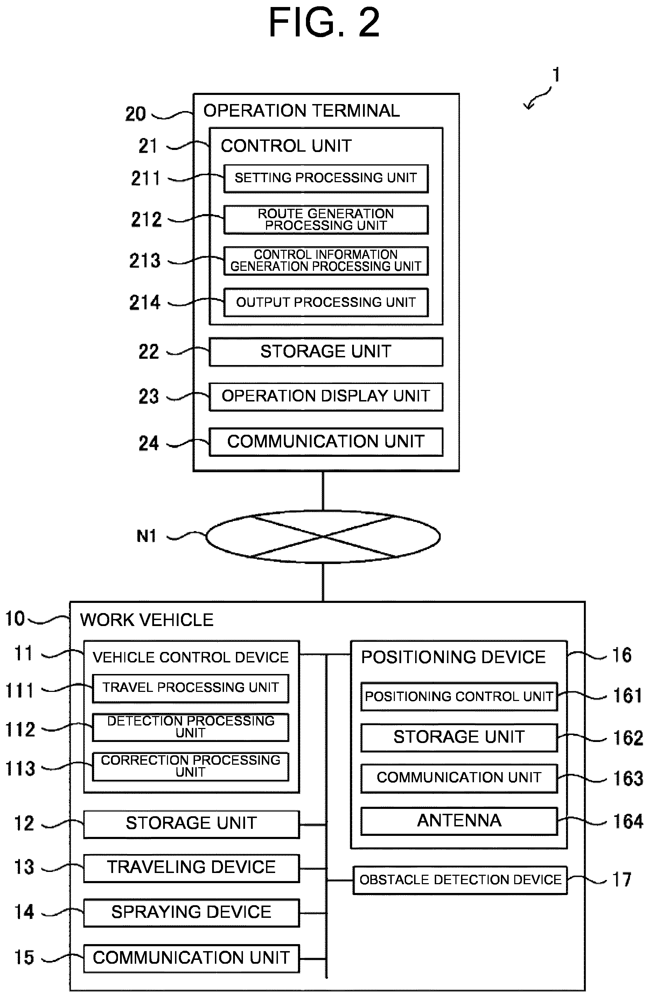

As illustrated in FIGS. 1 and 2, an automatic traveling system 1 according to an embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate with each other via a mobile phone line network, a packet line network, or a wireless local area network (LAN).

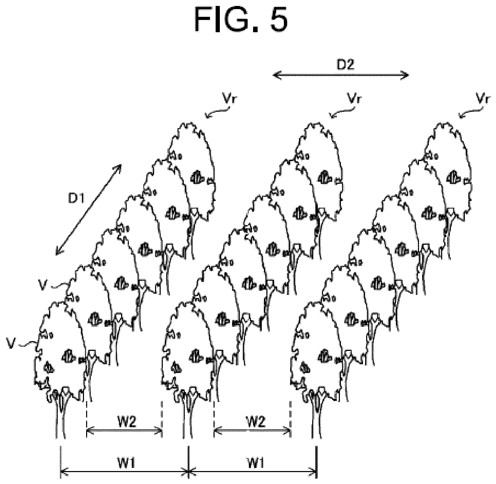

In the present embodiment, an example in which the work vehicle 10 is a vehicle that performs spraying work to spray chemical solutions, water, or the like on crops V (see FIG. 5) planted in a field F is described. The field F is an example of the work field in the present invention, such as a vineyard or an apple orchard. The crops V are, for example, grapevines. The spraying work is to spray chemical solutions, water, or other sprays to the crops V.

The crops V are arranged in a plurality of rows at predetermined intervals in the field F. Specifically, as illustrated in FIG. 5, a plurality of crops V is planted in straight lines in a predetermined direction (direction D1), so as to arrange crop rows Vr consisting of the plurality of crops V arranged in the straight lines. FIG. 5 illustrates an example of three crop rows Vr. The crop rows Vr are arranged at a predetermined interval W1 in the row direction (direction D2). An area (space) having an interval W2 between adjacent crop rows Vr functions as a work passage where the work vehicle 10 performs the spraying work to the crops V while traveling in the direction D1.

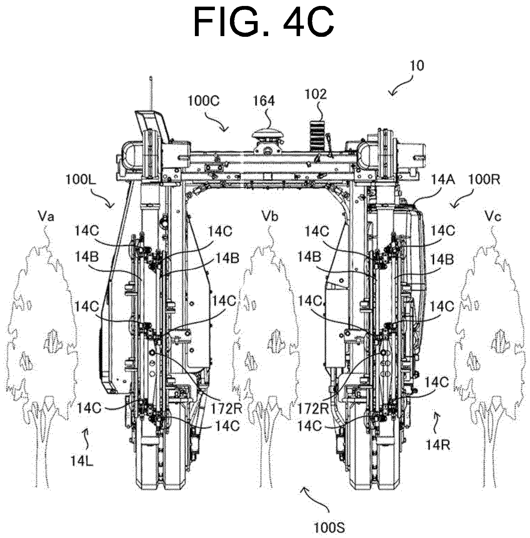

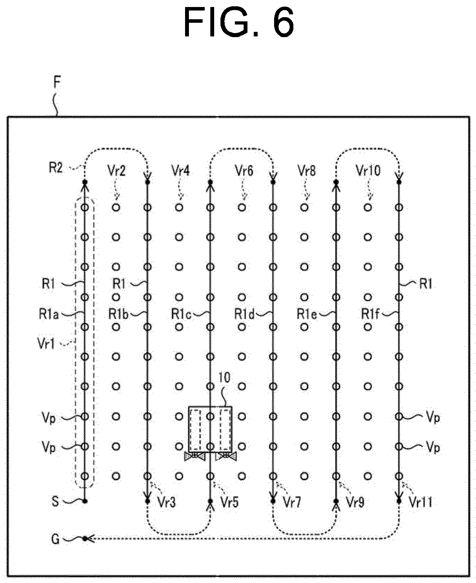

The work vehicle 10 can travel automatically (autonomously) along a preset target route R. For example, as illustrated in FIG. 6, from a work start position S to a work end position G, the work vehicle 10 travels automatically along the target route R consisting of a work route R1 (work routes R1a to R1f) and a transfer route R2. The work route R1 is a linear route along which the work vehicle 10 perform spraying work to the crops V in the work area, and the transfer route R2 is a route along which the work vehicle 10 moves between the crop rows Vr without performing the spraying work in a non-work route. The transfer route R2 includes a turning route and a straight route, for example. In the example illustrated in FIG. 6, the crops V consisting of the crop rows Vr1 to Vr11 are arranged in the field F. In FIG. 6, Vp indicates positions where the crops V are planted (crop positions). The work vehicle 10 traveling in the field F in FIG. 6 has a gate-shaped vehicle body 100 (see FIG. 4C), so as to travel over one crop row Vr, while spraying a chemical solution to the crops V of the crop row Vr and to the crop row Vr adjacent to the previous crop row Vr. For example, as illustrated in FIG. 6, when the work vehicle 10 travels over the crop row Vr5, the left vehicle body (left unit 100L) of the work vehicle 10 travels through the work passage between the crop rows Vr4 and Vr5, and the right vehicle body (right unit 100R) of the work vehicle 10 travels through the work passage between the crop rows Vr5 and Vr6, so that a chemical solution is sprayed to the crops V of the crop rows Vr4, Vr5, and Vr6.

The work vehicle 10 automatically travels in a predetermined order of rows. For example, the work vehicle 10 travels over the crop row Vr1, then travels over the crop row Vr3, and then travels over the crop row Vr5. In this way, the work vehicle 10 travels automatically according to a preset crop row Vr order. The work vehicle 10 may travel one row at a time or every multiple rows in the order of arrangement of the crop rows Vr.

The satellite 50 is a positioning satellite that constitutes a satellite positioning system such as a global navigation satellite system (GNSS), and transmits a satellite signal (GNSS signal). The base station 40 is a reference point (reference station) constituting the satellite positioning system. The base station 40 transmits correction information to the work vehicle 10 for calculating the current position of the work vehicle 10.

A positioning device 16 mounted on the work vehicle 10 executes positioning processing for calculating the current position (latitude, longitude, and altitude), azimuth, and the like of the work vehicle 10 using the GNSS signal transmitted from the satellite 50. Specifically, the positioning device 16 measures the position of the work vehicle 10 using a real time kinematic (RTK) method or the like for measuring the position of the work vehicle 10 based on the positioning information (for example, the GNSS signal) received by two receivers (an antenna 164 and the base station 40) and the correction information generated by the base station 40. Such a positioning method is a well-known technology, and thus a detailed description thereof is omitted.

In the following, the constituent components of the automatic traveling system 1 will be described in detail.

### Work Vehicle 10

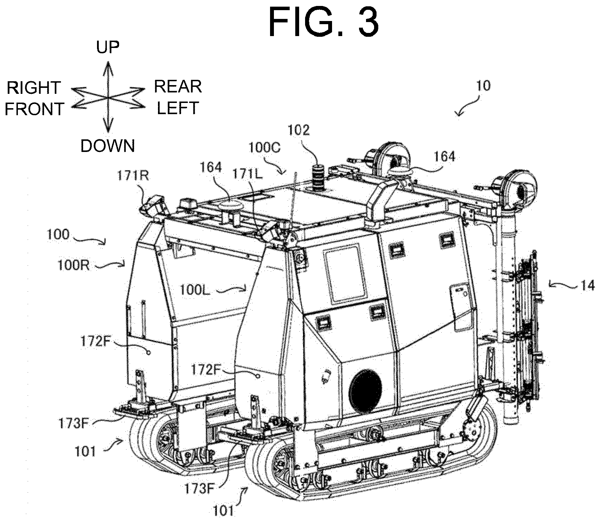

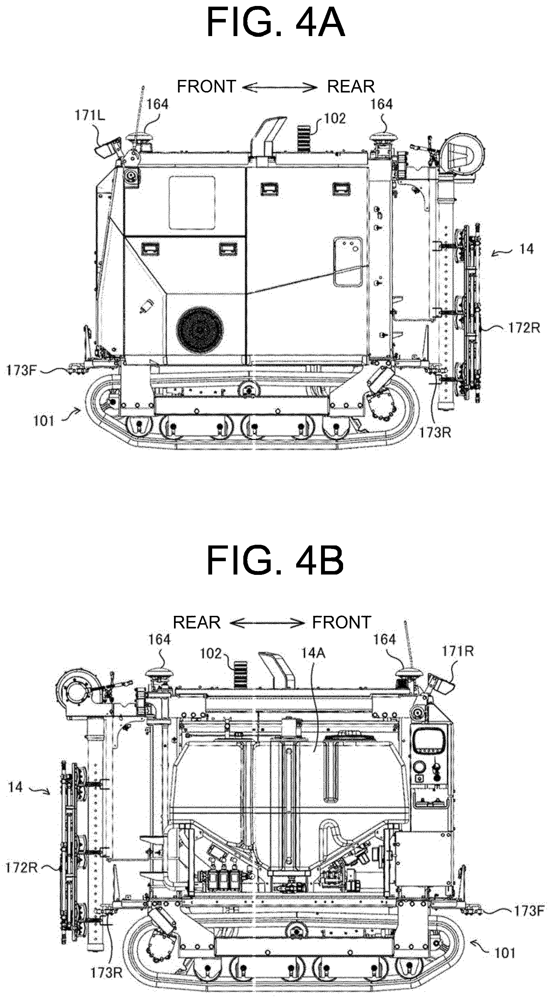

FIG. 3 is an external view of the work vehicle 10 when seen from the left front side. FIG. 4A is an external view of the left side of the work vehicle 10 when seen from the left side, FIG. 4B is an external view of the right side of the work vehicle 10 when seen from the right side, and FIG. 4C is an external view of the back side of the work vehicle 10 when seen from the back side.

As illustrated in FIGS. 1 to 4, the work vehicle 10 includes a vehicle control device 11, a storage unit 12, a traveling device 13, a spraying device 14, a communication unit 15, the positioning device 16, an obstacle detection device 17, and the like. The vehicle control device 11 is electrically connected to the storage unit 12, the traveling device 13, the spraying device 14, the positioning device 16, the obstacle detection device 17, and the like. The vehicle control device 11 and the positioning device 16 may be able to communicate wirelessly.

The communication unit 15 is a communication interface for connecting the work vehicle 10 to the communication network N1 by wire or wirelessly so as to execute data communication in accordance with a predetermined communication protocol with an external device such as the operation terminal 20 via the communication network N1.

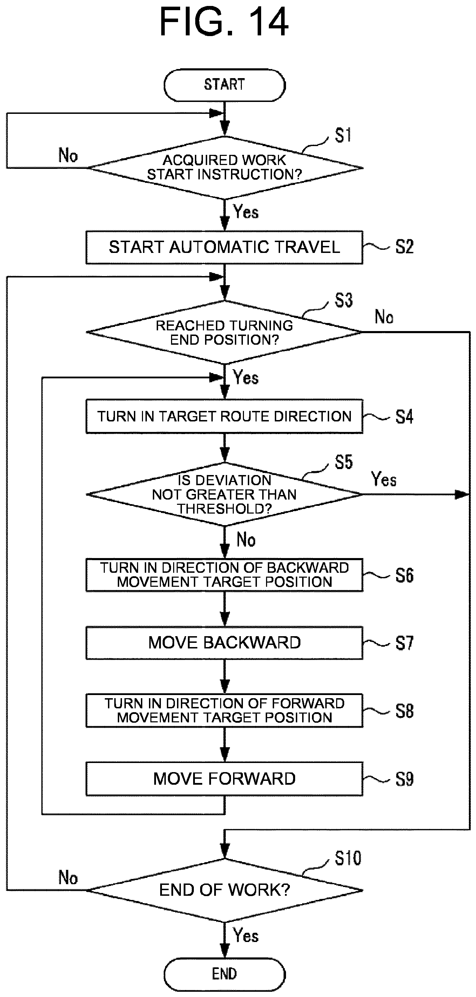

The storage unit 12 is a non-volatile storage unit including a hard disk drive (HDD), a solid state drive (SSD), or a flash memory that stores various types of information. The storage unit 12 stores a control program such as an automatic traveling program to cause the vehicle control device 11 to execute the automatic travel processing which will be described later (see FIG. 14). For example, the automatic traveling program is non-transitorily recorded on a computer-readable recording medium such as a compact disc (CD) or a digital versatile disc (DVD), and read by a predetermined reading device (not illustrated) for storage in the storage unit 12. The automatic traveling program may also be downloaded from a server (not illustrated) via the communication network N1 to the work vehicle 10 and stored in the storage unit 12. The storage unit 12 also stores route data including information on the target route R and control information F2 (which will be described later), which are generated in the operation terminal 20. For example, the route data is transferred from the operation terminal 20 to the work vehicle 10 and stored in the storage unit 12. The storage unit 12 also stores deviation information F1 (which will be described later) regarding the deviation (positional deviation and azimuth deviation) of the work vehicle 10.

The vehicle control device 11 includes control devices such as a central processing unit (CPU), a read only memory (ROM), and a random access memory (RAM). The CPU is a processor that executes various types of arithmetic processing. The ROM is a non-volatile storage unit that stores in advance control programs such as BIOS and the operating software (OS) for causing the CPU to execute various types of arithmetic processing. The RAM is a volatile or non-volatile storage unit that stores various types of information and is used as a temporary storage memory (work region) for various types of processing executed by the CPU. The vehicle control device 11 controls the work vehicle 10 by causing the CPU to execute various control programs previously stored in the ROM or the storage unit 12.

The vehicle control device 11 controls the travel of the work vehicle 10. Specifically, as illustrated in FIG. 2, the vehicle control device 11 includes various processing units such as a travel processing unit 111, a detection processing unit 112, and a correction processing unit 113. The vehicle control device 11 functions as the various processing units by causing the CPU to execute various types of processing in accordance with the control program. Some or all of the processing units may be composed of electronic circuits. The control program may be a program that causes a plurality of processors to function as the processing units.

The travel processing unit 111 causes the work vehicle 10 to automatically travel along the target route R based on the positioning information including the position and azimuth of the work vehicle 10 measured by the positioning device 16. For example, in the positioning state enabling the RTK positioning, when the operator presses a start button on an operation screen of the operation terminal 20, the operation terminal 20 outputs a work start instruction to the work vehicle 10. Upon acquisition of the work start instruction from the operation terminal 20, the travel processing unit 111 starts the automatic travel of the work vehicle 10 based on the positioning information of the work vehicle 10 measured by the positioning device 16. Accordingly, the work vehicle 10 starts automatic travel along the target route R, and the spraying device 14 starts the spraying work in the work passage.

In another embodiment, the travel processing unit 111 may cause the work vehicle 10 to start automatic travel when the operator operates a portable operation device (remote controller) near the work vehicle 10 (presses an automatic travel start button). It can be configured to permit the start of automatic travel the condition that the operator can visually check the work vehicle 10 nearby.

When the traveling stop instruction is acquired from the operation terminal 20, the travel processing unit 111 causes the work vehicle 10 to stop the automatic travel. For example, when the operator presses the stop button on the operation screen of the operation terminal 20, the operation terminal 20 outputs the traveling stop instruction to the work vehicle 10. Upon acquisition of the traveling stop instruction from the operation terminal 20, the travel processing unit 111 stops the automatic travel of the work vehicle 10. Accordingly, the work vehicle 10 stops the automatic travel, and stops the spraying work by the spraying device 14. The travel processing unit 111 is an example of the travel processing unit of the present invention.

Here, the work vehicle 10 includes a gate-shaped vehicle body 100 that travels over the crops V (fruit trees) planted in multiple rows in the field F. As illustrated in FIG. 4C, the vehicle body 100 is gate-shaped with the left unit 100L, the right unit 100R, and a connection unit 100C connecting the left and right units 100L and 100R, thus forming space 100S through which the crops V are allowed to pass is secured inside the left unit 100L, the right unit 100R, and the connection unit 100C.

Each of the left and right units 100L and 100R of the vehicle body 100 has a crawler 101 at the lower end portion thereof. An engine (not illustrated), a battery (not illustrated), and the like are provided in the left unit 100L. The right unit 100R has a storage tank 14A (see FIG. 4B) of the spraying device 14 or the like. Thus, assigning and disposing the constituent elements on the left and right units 100L and 100R of the vehicle body 100 attempts to equilibrate the right-left balance of the work vehicle 10 and lower the center of gravity. As a result, the work vehicle 10 can stably travel on the surface like rough ground, mud, sloping surfaces in the field F.

The traveling device 13 is a drive unit that causes the work vehicle 10 to travel. The traveling device 13 includes an engine, the crawler 101, and the like. The traveling device 13 is controlled by the vehicle control device 11.

The left and right crawlers 101 are driven by power from the engine with independent speed changes possible through a hydrostatic continuously variable transmission device. Accordingly, the vehicle body 100 is brought into a forward travel state in which the right and left crawlers 101 are driven at an even speed in the forward direction thereby to travel straight in the forward direction, and is brought into a backward travel state in which the right and left crawlers 101 are driven at an even speed in the backward direction thereby to travel straight in the backward direction. Also, the vehicle body 100 is brought into a forward turn state in which the right and left crawlers 101 are driven at uneven speeds in the forward direction thereby to make a turn while traveling forward, and is brought into a backward turn state in which the right and left crawlers 101 are driven at uneven speeds in the backward direction thereby to make a turn while traveling backward. Also, the vehicle body 100 is brought into a pivot turn state in which driving of any one of the right and left crawlers 101 is stopped and the other crawler 101 is driven, and is brought into a spin turn state in which the right and left crawlers 101 are driven at an even speed in the forward direction and the backward direction. The vehicle body 100 is brought into the travel stop state by stopping the driving of the right and left crawlers 101. The left and right crawlers 101 may be electrically driven by an electric motor.

As illustrated in FIG. 4C, the spraying device 14 includes a storage tank 14A that stores a chemical solution or the like, a spraying pump (not illustrated) that pumps the chemical solution or the like, an electric spraying motor (not illustrated) that drives the spraying pump, two spray pipes 14B provided in parallel on each side in a vertical position at the back of the vehicle body 100, a total of 12 spray nozzles 14C, provided three units for each spray pipe 14B, an electronically controlled valve unit (not illustrated) that changes the amount and pattern of spraying the chemical solution or the like, and a plurality of spraying pipes (not illustrated) connecting the above elements.

Each of the spray nozzles 14C is mounted to the corresponding spray pipe 14B in a vertically repositionable manner. This allows each spray nozzle 14C to change the distance between adjacent spray nozzles 14C and the height position with respect to the spray pipe 14B according to the object to be sprayed (crop V). Each of the spray nozzles 14C is also mounted so that its height position and left/right position relative to the vehicle body 100 can be changed according to the object to be sprayed.

Regarding the spraying device 14, the number of spray nozzles 14C provided for each of the spray pipes 14B can be changed in various ways according to the type of the crop V, the length of each of the spray pipes 14B, and the like.

As illustrated in FIG. 4C, of the plurality of spray nozzles 14C, the three spray nozzles 14C installed on the leftmost spray pipe 14B spray the chemical solution in a left direction toward the crops Va located on the left outer side of the vehicle body 100. Of the plurality of spray nozzles 14C, the three spray nozzles 14C installed on the left inner spray pipe 14B adjacent to the leftmost spray pipe 14B spray the chemical solution in a right direction to the crops Vb located in the space 100S in the center of the left-right direction of the vehicle body 100. Of the plurality of spray nozzles 14C, the three spray nozzles 14C installed on the rightmost spray pipe 14B spray the chemical solution in the right direction to the crops Vc located on the right outer side of the vehicle body 100. Of the plurality of spray nozzles 14C, the three spray nozzles 14C installed on the right inner spray pipe 14B adjacent to the rightmost spray pipe 14B spray the chemical solution in the left direction to the crops Vb located in the space 100S.

With the above configuration, in the spraying device 14, the two spray pipes 14B and the six spray nozzles 14C provided on the left unit 100L of the vehicle body 100 function as the left spraying unit 14L. The two spray pipes 14B and the six spray nozzles 14C provided at the right unit 100R of the vehicle body 100 function as the right spraying unit 14R. The left and right spraying units 14L and 14R are positioned at the back of the vehicle body 100 with a lateral spacing therebetween allowing the passage of the crops Vb (space 100S) between the left and right spraying units 14L and 14R in a state capable of spraying in the left and right directions.

In the spraying device 14, the spray patterns by the spraying units 14L and 14R include a four-direction spray pattern in which each of the spraying units 14L and 14R sprays the chemical solution in both left and right directions and a direction-limited spray pattern in which the spraying direction by the spraying units 14L and 14R is limited. The direction-limited spray pattern includes a left three-direction spray pattern in which the spraying unit 14L sprays the chemical solution in both right and left directions and the spraying unit 14R sprays the chemical solution only in the left direction, a right three-direction spray pattern in which the spraying unit 14L sprays the chemical solution only in the right direction and the spraying unit 14R sprays the chemical solution in both right and left directions, a two-direction spray pattern in which the spraying unit 14L sprays the chemical solution only in the right direction and the spraying unit 14R sprays the chemical solution only in the left direction, a left one-direction spray pattern in which the spraying unit 14L sprays the chemical solution only in the left direction and the spraying unit 14R does not spray the chemical solution, and a right one-direction spray pattern in which the spraying unit 14R sprays the chemical solution only in the right direction and the spraying unit 14L does not spray the chemical solution.

The vehicle body 100 is equipped with an automatic travel control unit that causes the vehicle body 100 to travel automatically along the target route R in the field F based on the positioning information or the like which is acquired from the positioning device 16, an engine control unit that executes the control related to the engine, a hydro-static transmission (HST) control unit that executes the control related to the hydrostatic continuously variable transmission device, and a work device control unit that executes the control related to the work device such as the spraying device 14. Each of the control units is composed of an electronic control unit provided with a microcontroller or the like, various types of information and control programs stored in a non-volatile memory (for example, an electrically erasable programmable read-only memory (EEPROM) such as a flash memory) of the microcontroller, and the like. The various types of information stored in the non-volatile memory may include a previously-generated target route R and the like. In the present embodiment, the respective control units are collectively referred to as the "vehicle control device 11" (see FIG. 2).

The positioning device 16 is a communication device including a positioning control unit 161, a storage unit 162, a communication unit 163, an antenna 164, and the like. The antenna 164 is provided in front and back portions of a ceiling unit (connection unit 100C) of the vehicle body 100 (see FIG. 3). The antenna 164 may be provided at one location in the work vehicle 10. Also, the ceiling unit of the vehicle body 100 is provided with, for example, a display light 102 that displays a travel state of the work vehicle 10 (see FIG. 3). The battery is connected to the positioning device 16, so that the positioning device 16 can operate even when the engine is being stopped.

The communication unit 163 is a communication interface for connecting the positioning device 16 to the communication network N1 by wire or wirelessly and for executing data communication in accordance with a predetermined communication protocol with external devices such as the base station 40 via the communication network N1.

The antenna 164 receives radio waves (GNSS signals) transmitted from satellites. Since the antenna 164 is provided in the front and back portions of the work vehicle 10, the current position and azimuth of the work vehicle 10 can be accurately measured.

The positioning control unit 161 is a computer system including one or more processors and a storage memory such as a non-volatile memory or a RAM. The storage unit 162 is a non-volatile memory or the like that stores a control program for causing the positioning control unit 161 to execute the positioning processing and also stores data such as the positioning information and movement information. The positioning control unit 161 measures the current position and azimuth of the work vehicle 10 by a predetermined positioning method (for example, the RTK method) based on the GNSS signals received by the antenna 164 from the satellite 50.

The obstacle detection device 17 detects an object to be detected in the field F by a detection unit (a lidar sensor, an ultrasonic sensor) provided in the work vehicle 10. The obstacle detection device 17 includes a lidar sensor 171L provided on the front left side of the vehicle body 100 and a lidar sensor 171R provided on the front right side of the vehicle body 100 (see FIG. 3). Each lidar sensor measures a distance from the lidar sensor to each distance measuring point (object to be detected) in a measurement range, for example, by a time of flight (TOF) method in which a distance to a distance measuring point is measured based on a round-trip time until the laser beam emitted from the lidar sensor reaches the distance measuring point (object to be detected) and returns.

The lidar sensor 171L sets a predetermined range on the front left side of the vehicle body 100 as the measurement range (detection range), and the lidar sensor 171R sets a predetermined range on the front-right side of the vehicle body 100 as the measurement range (detection range). Each lidar sensor transmits measurement information, such as the measured distance to each distance measuring point and a scanning angle (coordinate) relative to each distance measuring point to the vehicle control device 11. Thus, the lidar sensors 171L and 171R can detect the position (coordinate position) of the distance measuring point (object to be detected) in a coordinate system (sensor coordinate system) with respect to itself (mounting position).

The obstacle detection device 17 includes left and right ultrasonic sensors 172F (see FIG. 3) installed on the front side of the vehicle body 100 and left and right ultrasonic sensors 172R (see FIGS. 4A and4B) installed on the back side of the vehicle body 100. Each of the ultrasonic sensors measures a distance from each ultrasonic sensor to the distance measuring point by the TOF method in which the distance to the distance measuring point is measured based on a round-trip time until the ultrasonic wave transmitted from the ultrasonic sensor reaches the distance measuring point (object to be detected) and returns.

The measurement range (detection range) of the front left ultrasonic sensor 172F is set to a predetermined range on the front left side of the vehicle body 100, the measurement range (detection range) of the front right ultrasonic sensor 172F is set to a predetermined range on the front right side of the vehicle body 100, the measurement range (detection range) of the back left ultrasonic sensor 172R is set to a predetermined range on the back left side of the vehicle body 100, and the measurement range (detection range) of the back right ultrasonic sensor 172R is set to a predetermined range on the back right side of the vehicle body 100. Each of the ultrasonic sensors transmits the measurement information including the measured distance and azimuth to the object to be measured to the vehicle control device 11. Thus, the ultrasonic sensors 172F can detect the distance to the measuring point (object to be detected) in a coordinate system (sensor coordinate system) with respect to itself (mounting position).

The obstacle detection device 17 includes left and right contact sensors 173F (see FIG. 3) installed on the front side of the vehicle body 100 and left and right contact sensors 173R (see FIGS. 4A and 4B) installed on the back side of the vehicle body 100. When an obstacle comes into contact with the contact sensor 173F on the front side of the vehicle body 100, the contact sensor 173F detects the obstacle. The spraying device 14 is provided in front (toward the back side of the work vehicle 10) of the contact sensor 173R on the back side of the vehicle body 100. When the obstacle comes into contact with the spraying device 14, the contact sensor 173R detects the obstacle when the spraying device 14 moves backward (toward the front side of the work vehicle 10). Once the obstacle is detected, each contact sensor transmits a detection signal to the vehicle control device 11.

The vehicle control device 11 determines whether the detected object is the obstacle based on the measurement information regarding the detected object acquired from the obstacle detection device 17, and executes avoidance processing (travel restriction processing) for causing the work vehicle 10 to avoid the obstacle when it is determined that the detected object is the obstacle.

The vehicle control device 11 also detects a positional deviation and an azimuth deviation of the work vehicle 10 and corrects the deviation, thereby executing an operation (correction operation) of maintaining the automatic travel.

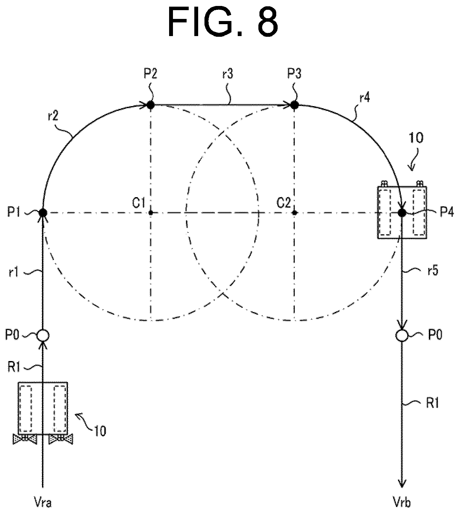

For example, the travel processing unit 111 moves the work vehicle 10 from the work route R1 of the crop row Vra to the work route R1 of the crop row Vrb according to the target route R illustrated in FIG. 8. When reaching the end point P0 of the crop row Vra, the work vehicle 10 stops spraying and travels straight on the straight route r1, and starts turning at the turning start position P1. Upon start of turning, the work vehicle 10 moves along a turning route r2, a straight route r3, and a turning route r4, travels straight along a straight route r5 from the turning end position P4, moves to the end point P0 of the crop row Vrb which is the next work route R1, and then resumes spraying. In FIG. 8, reference sign C1 indicates the turning center of the turning route r2, and reference sign C2 indicates the turning center of the turning route r4. The turning radii of the turning routes r2 and r4 are identical.

The detection processing unit 112 of the vehicle control device 11 detects a deviation (positional deviation, azimuth deviation) of the automatically traveling work vehicle 10. Specifically, the detection processing unit 112 detects the positional deviation and the azimuth deviation of the work vehicle 10 with respect to the target route R based on the positioning information (the current position and the current azimuth) obtained by the positioning device 16.

The correction processing unit 113 of the vehicle control device 11 determines whether the positional deviation detected by the detection processing unit 112 exceeds a preset threshold (positional threshold). When the positional deviation exceeds the positional threshold, the correction processing unit 113 executes a correction operation for correcting the positional deviation. The correction processing unit 113 also determines whether the azimuth deviation detected by the detection processing unit 112 exceeds a preset threshold (azimuth threshold). When the azimuth deviation exceeds the azimuth threshold, the correction processing unit 113 executes a correction operation for correcting the azimuth deviation. The positional threshold and the azimuth threshold are set in advance, for example, in the operation terminal 20. The positional threshold and the azimuth threshold are both examples of the threshold in the present invention. The correction processing unit 113 is an example of a correction processing unit in the present invention.

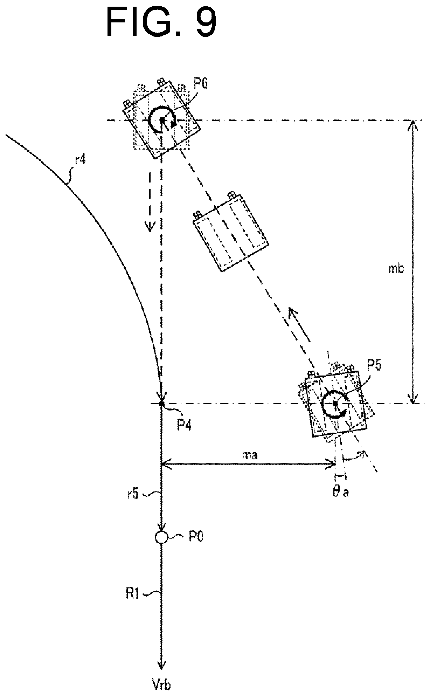

Here, an example of the correction operation is described with reference to FIG. 9. FIG. 9 illustrates a part of the target route R including the turning route r4 and the straight route r5 illustrated in FIG. 8. For example, when the work vehicle 10 deviates from the turning route r4 of the target route R, and a positional deviation ma exceeds the positional threshold while an azimuth deviation θa exceeds the azimuth threshold at the position P5 distant from the turning end position P4 which is the target position by ma (positional deviation), the correction processing unit 113 executes the following correction operation. First, the correction processing unit 113 sets a position P6 (virtual target position) on the extension line of the straight route r5, and causes the work vehicle 10 to make a spin turn (or neutral turn) at the position P5 so as to face the position P6. The position P6 is a position distant from the turning end position P4 by a distance mb (for example, 2 m).

The correction processing unit 113 causes the work vehicle 10 to move backward until the work vehicle 10 reaches the position P6 or until the positional deviation ma of the work vehicle 10 with respect to the extension line of the straight route r5 becomes equal to or less than a predetermined value.

At the position P6, the correction processing unit 113 causes the work vehicle 10 to make a spin turn until the azimuth deviation of the work vehicle 10 with respect to the direction of the extension line of the straight route r5 becomes equal to or less than the azimuth threshold. The correction processing unit 113 then causes the work vehicle 10 to travel straight from the position P6 to the turning end position P4 along the extension line of the straight route r5. After that, the travel processing unit 111 causes the work vehicle 10 to travel straight on the straight route r5 and enter the work route R1 of the crop row Vrb from the end point P0.

The correction processing unit 113 performs the correction operation until the deviation (positional deviation, azimuth deviation) becomes equal to or less than the threshold. For this reason, for example, when the state of the field F (surface soil) is not good or when the field F is inclined, it is possible that the deviation frequently exceeds the threshold. In this case, the work vehicle 10 cannot resume the automatic travel along the target route R, and the correction operation is repeatedly executed.

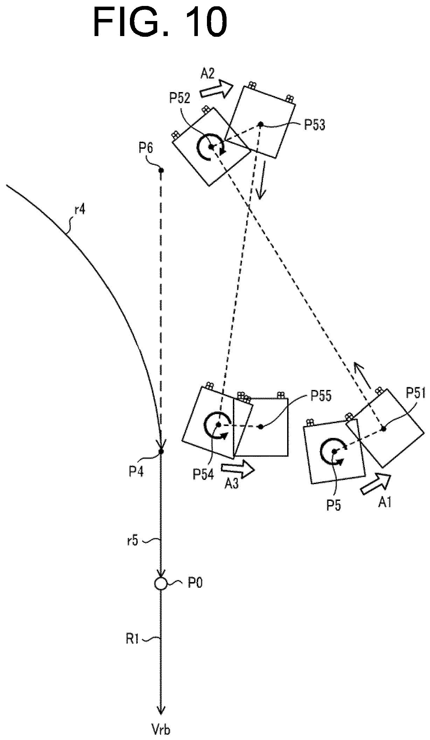

For example, as illustrated in FIG. 10, at the position P5 where the deviation of the work vehicle 10 exceeds the threshold, if the work vehicle 10 is caused to make a spin turn so as to match the position P6 which is the target position, the work vehicle 10 slides down by a predetermined amount in a direction A1 along the slope of the field F. The work vehicle 10 also moves backward from the position P51 to the position P6, and slides down by a predetermined amount along the slope of the field F. As a result, the work vehicle 10 reaches a position P52 deviating from the original target position P6. When the work vehicle 10 makes a spin turn at the position P52 so as to match the position P4 which is the next target position, the work vehicle 10 slides down by a predetermined amount in a direction A2 along the slope of the field F. When the work vehicle 10 moves straight from the slid-down position P53 to the position P4, the work vehicle 10 slides down by a predetermined amount along the slope of the field F. As a result, the work vehicle 10 reaches a position P54 shifted from the original target position P4. When the work vehicle 10 makes a spin turn at the position P54 in accordance with the direction of the straight route r5 which is the target route, the work vehicle 10 slides down by a predetermined amount in a direction A3 along the slope of the field F to reach a position P55. At the position P55, when the deviation (positional deviation, azimuth deviation) with respect to the position P4 still exceeds the threshold, the automatic travel start condition is not satisfied (the automatic travel cannot be started), and the work vehicle 10 executes the correction operation again.

Thus, when an unexpected shift occurs due to the state of the field F (roughness, slope, or the like) during turning or forward/backward movement, the work vehicle 10 cannot be moved to the target position (for example, position P6, position P4) set as the virtual point, and the automatic travel start condition is not satisfied, thus executing the correction operation repeatedly. As a result, a problem arises in that the work efficiency by the work vehicle 10 (here, the work efficiency of the spraying work) decreases. In contrast, with the work vehicle 10 according to the present embodiment, the work efficiency can be enhanced by preventing the repeated correction operation.

Specifically, in a case in which a deviation including at least one of a positional deviation and an azimuth deviation of the work vehicle 10 with respect to the target route R exceeds a threshold, the correction processing unit 113 according to the present embodiment causes a correction operation of correcting the deviation to be executed using a shift amount (deviation amount) of the work vehicle 10 generated in the past correction operation. For example, when the correction processing unit 113 executes the correction operation multiple times successively at a location where the deviation exceeds the threshold, the correction processing unit 113 performs the current correction operation using a shift amount corresponding to the previous correction operation.

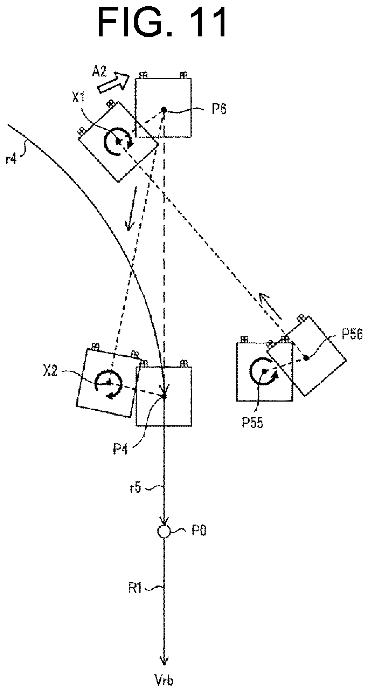

FIG. 11 illustrates an example of the current correction operation. For example, as illustrated in FIG. 9, when the work vehicle 10 deviates from the turning route r4 of the target route R and the positional deviation and the azimuth deviation exceed the thresholds (the automatic travel start condition is not satisfied) at the position P5 distant from the target turning end position P4 by ma (positional deviation), the correction processing unit 113 first executes the correction operation illustrated in FIG. 10. The determination reference position is not limited to the turning end position P4, but can be any other position on the straight route r5 (pre-spray route) continuing to the work route R1.

When the automatic travel start condition is still not satisfied even when the correction operation illustrated in FIG. 10 is executed, the correction processing unit 113 executes the correction operation (current correction operation) illustrated in FIG. 11 using the shift amount of the turning and the forward/backward movement of the work vehicle 10 generated in the correction operation (example of the previous correction operation) illustrated in FIG. 10.

Specifically, the correction processing unit 113 determines a target position X1 (position X1 shifted from the target position P6) corresponding to the original target position P6 at the position P55 of the work vehicle 10 at the end of the previous correction operation. For example, the correction processing unit 113 determines the target position X1 corresponding to the original target position P6 by considering a shift amount (shift amount from the position P5 to the position P51 in FIG. 10) during the spin turn immediately before the backward movement in the previous correction operation and considering a shift amount (shift amount when moving from the position P51 to the position P52 in FIG. 10) during the backward movement following the spin turn in the previous correction operation.

The correction processing unit 113 sets the target position X1 at the time when the work vehicle 10 stops at the position P55, and causes the correction operation to be executed. First, the correction processing unit 113 causes the work vehicle 10 to make a spin turn at the position P55 by a predetermined angle so as to match the direction of the target position X1. For example, the correction processing unit 113 sets the predetermined angle to an angle corresponding to a shift amount (shift amount ratio which will be described later) from the turning angle during the correction operation at the previous position P55.

When the correction processing unit 113 causes the work vehicle 10 to make a spin turn at the position P55, the work vehicle 10 slides down along the slope of the field F by an amount corresponding to the shift amount in the previous correction operation (shift amount from the position P5 to the position P51 in FIG. 10) and moves to the position P56. After that, the correction processing unit 113 causes the work vehicle 10 to move backward toward the target position X1. The work vehicle 10 starts moving backward from the position P56 and stops when reaching the target position X1.

Subsequently, the correction processing unit 113 determines a target position X2 (position X2 shifted from the target position P4) corresponding to the original target position P4 at the target position X1. For example, the correction processing unit 113 determines the target position X2 corresponding to the original target position P4 by considering the shift amount (shift amount from the position P52 to the position P53 in FIG. 10) in the previous correction operation during the spin turn immediately before the forward movement, and considering the shift amount (shift amount when moving from the position P53 to the position P54 in FIG. 10) in the previous correction operation during the straight movement following the spin turn.

Once the target position X2 is determined, the correction processing unit 113 causes the work vehicle 10 to make a spin turn by a predetermined angle so as to match the direction of the target position X2. As a result, the work vehicle 10 slides down along the slope of the field F by an amount corresponding to the shift amount in the previous correction operation (shift amount from the position P52 to the position P53 in FIG. 10), and moves to the position P6 (or the vicinity of the position P6). After that, the correction processing unit 113 moves the work vehicle 10 forward toward the target position X2. The work vehicle 10 starts moving backward from the position P6 and stops when reaching the target position X2.

When the correction processing unit 113 causes the work vehicle 10 to make a spin turn by a predetermined angle at the target position X2 so as to match the direction of the position P4, the work vehicle 10 slides down along the slope of the field F by a shift amount corresponding to the shift amount in the previous correction operation (shift amount from the position P54 to the position P55 in FIG. 10), and stops at the position P4 or near the position P4. Accordingly, when the deviation with respect to the position P4 (turning end position) becomes equal to or less than the threshold, the work vehicle 10 satisfies the automatic travel start condition, travels straight from the turning end position P4 along the straight route r5, moves to the end point P0 of the crop row Vrb, which is the next work route R1, and resumes the spraying work.

In this way, when the correction processing unit 113 acquires the shift amount (first shift amount) during the turn of the work vehicle 10 and the shift amount (second shift amount) during the forward or backward movement of the work vehicle 10 in the previous correction operation, the correction processing unit 113 determines the target position (positions P6, P4) based on the first shift amount and the second shift amount and moves the work vehicle 10 to the target position in the current correction operation. This allows an appropriate target position (virtual target position) of the work vehicle 10 to be set in the correction operation.

The correction processing unit 113 shifts the target position (positions P6, P4) in the correction operation using the actual value of the shift amount in the previous correction operation. In the example illustrated in FIG. 11, the correction processing unit 113 shifts the target position P6 to the position X1 and shifts the target position P4 to the position X2. In the correction operation, the correction processing unit 113 causes the work vehicle 10 to travel (for example, turn or move forward/backward) toward the shifted target positions X1 and X2, so that the work vehicle 10 can come closer to the original target positions P6 and P4 when the positional deviation and the azimuth deviation occur. Therefore, a small number of correction operations can return the work vehicle 10 to the target route R, thus preventing the correction operation from being performed repeatedly.

The method of correction operation illustrated in FIG. 11 is an example of the correction operation of the present invention, and the correction operation of the present invention is not limited to this method.

Here, the correction processing unit 113 may stop the correction operation and stop the work vehicle 10 when the number of times of execution of the correction operation reaches a predetermined number of times or when a predetermined period of time has passed from the start of the correction operation. For example, the correction processing unit 113 stops the correction operation when the automatic traveling start condition is not satisfied (when the deviation exceeds the threshold) even when the correction operation is repeatedly executed five times. This avoids the problem of unnecessary repetition of the correction operations, which can disturb the field F or contact the object to be worked (for example, trees to be sprayed).

When executing the correction operation (see FIG. 11) by considering the shift amount generated in the past correction operation, the work vehicle 10 can be returned to the target route with a smaller number of times of the correction operation, compared to a case in which the correction operation is executed without considering the shift amount generated in the past correction operation. Therefore, the correction processing unit 113 may set the predetermined number of times (upper limit number) for executing the correction operation that considers the shift amount occurred in past correction operation (see FIG. 11) to be smaller than the predetermined number of times (upper limit number) for executing the correction operation that does not consider the shift amount occurred in the past correction operation (see FIG. 10).

In the correction processing unit 113, when the deviation from the target route R after the correction operation is greater than the deviation from the target route R after the previous correction operation, the possibility of satisfying the automatic travel start condition decreases. In contrast, when the deviation is smaller than the deviation with respect to the target route R after the previous correction operation, it is more likely that the automatic travel condition is satisfied. Therefore, the correction processing unit 113 may dynamically change (increase or decrease) the predetermined number of times (upper limit number) every time the correction operation is executed. For example, since the possibility of satisfying the automatic travel start condition decreases when the deviation relative to the target route R after the correction operation becomes greater than the deviation relative to the target route R after the previous correction operation, the correction processing unit 113 decreases the predetermined number of times and stops the correction operation early. On the other hand, since the possibility of satisfying the automatic travel start condition is higher when the deviation relative to the target route R after the correction operation is smaller than the deviation relative to the target route R after the previous correction operation, the correction processing unit 113 increases the predetermined number of times to increase the opportunity to satisfy the automatic travel start condition.

Since the deviation of the work vehicle 10 relative to the target route R can be suppressed by performing the correction operation illustrated in FIG. 11, the work vehicle 10 can appropriately start the automatic travel even when the automatic travel start condition (corresponding to the permission condition of the present invention) is relaxed. Therefore, the vehicle control device 11 may relax the automatic travel start condition according to the target route R after the correction operation is executed in the non-work area (outside the work route R1) than the automatic travel start condition in the work area (inside the work route R1). For example, when the automatic traveling start condition in the work route R1 is set to "lateral deviation (positional deviation) within 0.15 m and the azimuth deviation within 15 degrees", the vehicle control device 11 sets the automatic traveling start condition at the turning end position P4 to "the lateral deviation (positional deviation) within 1 m and the azimuth deviation within 45 degrees".

As a result, the work vehicle 10 can quickly return to the target route R, thus enhancing the work efficiency.

When the work vehicle 10 starts the automatic travel, the operator approaches the work vehicle 10 and gives an instruction to start the work (presses an automatic travel start button). Although it is conceivable that the correction operation is executed immediately after the work vehicle 10 starts the automatic travel, but it is difficult for the operator to predict that the correction operation is executed. When the work vehicle 10 is made to execute the correction operation within a predetermined time after the work vehicle 10 starts the automatic travel, the vehicle control device 11 may cause the work vehicle 10 to be stopped for a certain period of time and report predetermined warning information so that the operator near the work vehicle 10 can notice. For example, the vehicle control device 11 causes the work vehicle 10 or the operation terminal 20 to output warning sounds or voice warning messages, or to display warning messages on the operation terminal 20. This alerts the operator to the surroundings of the work vehicle 10, so that the operator can easily know that the correction operation is to be executed. The vehicle control device 11 may execute the correction operation after reporting the warning information for a certain period of time, or may execute the correction operation upon receipt of a confirmation operation from the operator with respect to the warning information.

The configuration of the work vehicle 10 described above is an example configuration of the work vehicle, and the present invention is not limited to the configuration described above. The work vehicle 10 described above is a vehicle capable of performing the spraying work of spraying a spray material over the first crop row Vr and the second crop row Vr on the left and right sides of the first crop row Vr while traveling across the first crop row Vr. Alternatively, in another embodiment, the work vehicle 10 may have a normal-shaped vehicle body 100, instead of the gate shape, so that the entire vehicle body 100 travels between the crop rows Vr (work passage). In this case, the work vehicle 10 automatically travel in each work passage without straddling the crop row Vr. The spraying device 14 includes one spraying unit and performs the spraying work by switching the spray patterns among the spray pattern to spray the chemical solution in the left and right directions, the spray pattern to spray the chemical solution only in the left direction, and the spray pattern to spraying the chemical solution only in the right direction.

The work vehicle 10 is not limited to a vehicle that performs a predetermined work on the object to be worked planted in the field F, and may be a vehicle (for example, a tractor, or a combine harvester) that performs a predetermined work (for example, tilling, planting, weeding, or harvesting) on the field F.

### Operation Terminal 20

As illustrated in FIG. 2, the operation terminal 20 is an information processing device that includes the control unit 21, the storage unit 22, the operation display unit 23, the communication unit 24, and the like. The operation terminal 20 may be a portable terminal such as a tablet terminal or a smartphone.

The communication unit 24 is a communication interface that connects the operation terminal 20 to the communication network N1 by wire or wirelessly so as to execute data communication in accordance with a predetermined communication protocol with external devices such as one or more work vehicles 10 via the communication network N1.

The operation display unit 23 is a user interface including a display unit, such as a liquid crystal display or an organic electroluminescence (EL) display, that displays various types of information, and an operation unit, such as a touch panel, a mouse, or keyboard, that accepts operations. On the operation screen displayed on the display unit, the operator can operate the operation unit to register various types of information (such as work vehicle information, field information, and work information, which will be described later). The operator can operate the operation unit to provide a work start instruction, traveling stopping instruction, and the like directed to the work vehicle 10. The operator can grasp, at a distance from the work vehicle 10, the traveling state, work state, and surrounding situation of the work vehicle 10 that automatically travels along the target route R in the field F, according to the traveling trajectory displayed on the operation terminal 20 and the surrounding images of the vehicle body 100.

The storage unit 22 is a non-volatile storage unit such as an HDD, an SSD, or a flash memory that stores various types of information. The storage unit 22 stores a control program for causing the control unit 21 to execute various types of processing. For example, the control program, which is non-transiently recorded in a computer-readable recording medium such as a CD or a DVD, is read by a predetermined reading device (not illustrated) and stored in the storage unit 22. The control program may be downloaded from a server (not illustrated) to the operation terminal 20 via the communication network N1 and be stored in the storage unit 22.

The control unit 21 includes control devices such as a CPU, a ROM, and a RAM. The CPU is a processor that executes various types of arithmetic processing. The ROM is a non-volatile storage unit that stores in advance control programs such as BIOS and the OS for causing the CPU to execute various types of arithmetic processing. The RAM is a volatile or non-volatile storage unit that stores various types of information and is used as a temporary storage memory (work region) for various types of processing executed by the CPU. The control unit 21 controls the operation terminal 20 with the CPU executing various kinds of control programs stored in advance in the ROM or the storage unit 22.

As illustrated in FIG. 2, the control unit 21 includes various processing units such as a setting processing unit 211, a route generation processing unit 212, a control information generation processing unit 213, and an output processing unit 214. The control unit 21 executes various types of processing in accordance with the control program by the CPU to function as the various processing units. Some or all of the processing units may be composed of electronic circuits. The control program may be a program that causes a plurality of processors to function as the processing units.

The setting processing unit 211 sets and registers information related to the work vehicle 10 (hereinafter referred to as work vehicle information), information related to the field F (hereinafter referred to as field information), and information related to work (the spraying work) (hereinafter referred to as work information).

In the setting processing of the work vehicle information, the setting processing unit 211 sets, by the operator performing registration operations on the operation terminal 20, information such as the model of the work vehicle 10, the positions where the antennas 164 are installed on the work vehicle 10, the type of a work machine (here, the spraying device 14), the size and shape of the work machine, the position of the work machine relative to the work vehicle 10, the vehicle speed and engine rotational speed during working of the work vehicle 10, and the vehicle speed and engine rotational speed during turning of the work vehicle 10. In the present embodiment, the information on the spraying device 14 is set as the information on the work machine.

In the setting processing of the field information the setting processing unit 211 sets information such as the position and shape of the field F, the work start position S at which the work is started and the work end position G at which the work is ended (see FIG. 6), and the work direction by the operator performing registration operations on the operation terminal 20. The work direction means a direction in which the work vehicle 10 is made to travel while doing the spraying work with the spraying device 14 in the work area defined by excluding the non-work area such as a headland from the field F.

The information of the position and shape of the field F can be acquired automatically, for example, by the operator manually making the work vehicle 10 travel around the field F along the periphery thereof once and recording the transition of the position information of the antenna 164 during that time. The position and the shape of the field F can also be acquired based on a polygon obtained by the operator operating the operation terminal 20 with a map being displayed on the operation terminal 20 and designating a plurality of points on the map. An area specified by the acquired position and shape of the field F is an area (traveling area) in which the work vehicle 10 can travel.

In the setting processing of the work information, the setting processing unit 211 is configured to be able to set, as the work information, the number of skips, which is the number of work routes to be skipped in a case in which the work vehicle 10 makes a turn in the headland, the width of the headland, and the like.

The route generation processing unit 212 generates the target route R on which the work vehicle 10 automatically travels based on each piece of setting information. The target route R is, for example, the route from the work start position S to the work end position G (see FIG. 6). The target route R illustrated in FIG. 6 includes the linear work route R1 for spraying the chemical solution to the crops V in the area where the crops V are planted, and the transfer route R2 for moving between the crop rows Vr without performing the spraying work. The work route R1 is set in the work area, and the transfer route R2 is set in the non-work area (headland area).

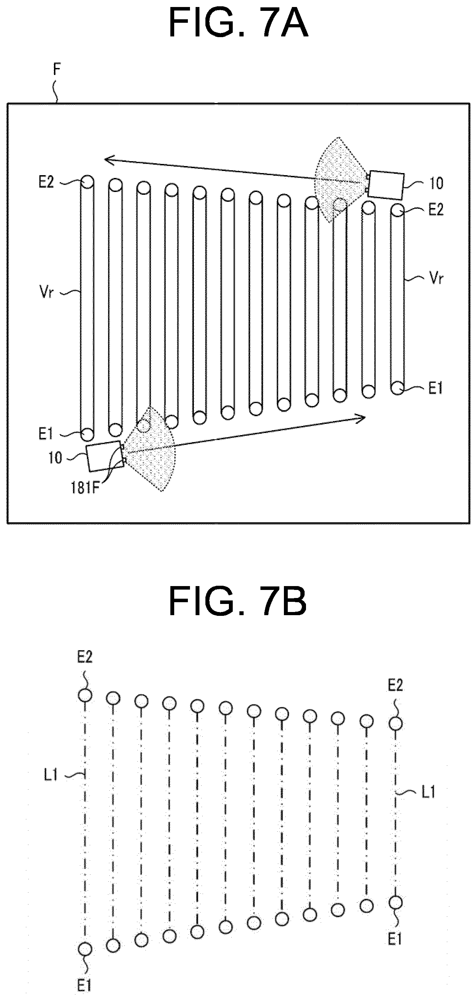

An example of the method for generating the target route R is described with reference to FIGS. 7A and 7B. FIG. 7A schematically illustrates the crop rows Vr. First, the operator manually drives the work vehicle 10 along the perimeter of the crop rows Vr (see FIG. 7A). The work vehicle 10 detects an end point E1 on one side (bottom side in FIG. 7A) and an end point E2 on the other side (top side in FIG. 7A) of each crop row Vr while traveling and obtains position information (coordinates) of the respective end points E1 and E2. The end points E1 and E2 may be the positions where the crops V are already planted or the target positions indicating the positions of the crops V to scheduled to be planted. Upon acquisition of the position information (coordinates) of the end points E1 and E2 from the work vehicle 10, the route generation processing unit 212 sets a line L1 (see FIG. 7B) connecting the corresponding end points E1 and E2 as the work route for the crop row Vr and generates the target route R including a plurality of work routes and transfer routes (turning routes). The method for generating the target route R is not limited to the above-described method. The route generation processing unit 212 may store the generated target route R in the storage unit 22.

The control information generation processing unit 213 generates the control information F2 to control the spraying direction (spray pattern) of spraying the chemical solution to the crops V by the spraying units 14L and 14R provided on the work vehicle 10 according to the position of either the crops V on the work route R1 or the crops V adjacent to the work route R1 on which the work vehicle 10 performs spraying work while traveling automatically.

Specifically, the control information generation processing unit 213 generates the control information F2 to switch the spray pattern based on the positional relationship of the end points of the respective crop rows Vr. The spray pattern includes the four-direction spray pattern, the left three-direction spray pattern, the right three-direction spray pattern, the two-direction spray pattern, the left one-direction spray pattern, and the right one-direction spray pattern, as described above.

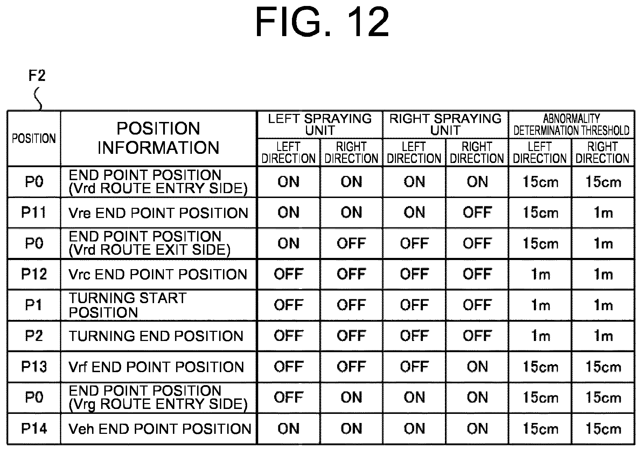

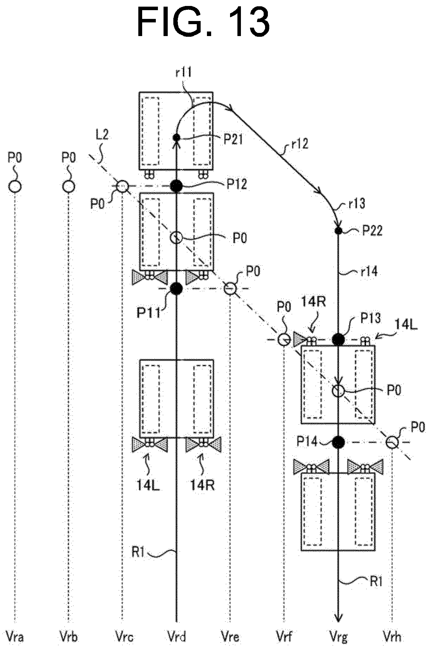

An example of a spraying work method corresponding to the control information F2 (see FIG. 12) according to the present embodiment is described with reference to FIG. 13. In the example illustrated in FIG. 13, the crops V in the field F are planted so that a line L2 connecting the end points P0 of the crop rows Vrc to Vrh is oblique to the direction in which the crops V are arranged in the crop row Vr (work route direction).

First, the work vehicle 10 travels straight on the work passage across the crop row Vrd, and performs the spraying work in the four-direction spray pattern in which each of the spraying units 14L and 14R sprays the chemical solution in both the right and left directions. Subsequently, when the work vehicle 10 reaches a position P11 corresponding to the end point P0 of the crop row Vre, the spraying device 14 switches from the four-direction spray pattern to the left three-direction spray pattern in which the spraying unit 14L sprays the chemical solution in both left and right directions and the spraying unit 14R sprays the chemical solution only in the left direction. It should be noted that, in the present embodiment, "the work vehicle 10 reaches the position P" means that the positions of the spraying units 14L and 14R of the work vehicle 10 reaches the position P. Since the current position of the work vehicle 10 indicates the center position of the work vehicle 10, the positions of the spraying units 14L and 14R can be calculated based on the distance from the center position to the spraying units 14L and 14R.

When the work vehicle 10 reaches the end point P0 of the crop row Vrd, the spraying device 14 switches from the left three-direction spray pattern to the left one-direction spray pattern in which the spraying unit 14 L sprays only in the left direction and the spraying unit 14R does not spray the chemical solution. After that, the work vehicle 10 travels straight to a position P12 corresponding to the end point P0 of the crop row Vrc while performing the spraying work in the left one-direction spray pattern. When the work vehicle 10 reaches the position P12, both the spraying units 14L and 14R stop spraying. After that, when the work vehicle 10 passes the position P12 and reaches a turning start position P21, the work vehicle 10 starts turning. Once the turning starts, the work vehicle 10 moves along a turning route r11, a straight route r12, and a turning route r13, travels straight on a straight route r14 from a turning end position P22, and moves to the end point P0 of the crop row Vrg which is the next work passage.

When the work vehicle 10 reaches a position P13 corresponding to the end point P0 of the crop row Vrf, the spraying device 14 resumes the spraying work with the right one-direction spray pattern in which the spraying unit 14R sprays only in the right direction and the spraying unit 14L does not spray the chemical solution. When the work vehicle 10 reaches the end point P0 of the crop row Vrg, the spraying device 14 switches from the right one-direction spray pattern to the right three-direction spray pattern in which the spraying unit 14L sprays the chemical solution only in the right direction and the spraying unit 14R sprays the chemical solution in both left and right directions. When the work vehicle 10 reaches a position P14 corresponding to the end point P0 of the crop row Vrh, the spraying device 14 switches from the right three- direction spray pattern to the four-direction spray pattern and performs the spraying work. As described above, the work vehicle 10 performs the spraying work while switching the spray pattern in accordance with the position of the crops V adjacent to the work route R1.

FIG. 12 illustrates the control information F2 corresponding to the above-described spraying work. The control information F2 illustrated in FIG. 12 represents the information for controlling the spray pattern when the work vehicle 10 performs the spraying work on the work route R1 of the crop rows Vrd and Vrg. The control information generation processing unit 213 generates the control information F2 for all the crop rows Vr in the field F.

The work vehicle 10 performs the spraying work based on the control information F2 while automatically traveling along the target route R. According to the present embodiment, a wasteful application of chemical solutions to areas where the crops V do not exist can be prevented. In addition, the areas where crops V exist can be prevented from becoming unsprayed. Therefore, the spraying work method according to the present embodiment can enhance the work efficiency of the spraying work.

The on and off control timings of the spraying units 14L and 14R in the control information F2 are set in accordance with the position of the work vehicle 10 and the positions of the spraying units 14L and 14R.

Specifically, the control information generation processing unit 213 calculates the distance between the measured center position of the work vehicle 10 and the work start position and calculates the control timings of the spraying units 14L and 14R based on the set traveling speed. Since the spraying units 14L and 14R need to turn on/off a spray blower motor (not illustrated), open/close the spray nozzles 14C, and the like, the control information generation processing unit 213 considers the operating time of these elements in calculating the control timing of the spraying units 14L and 14R. Thus, in the control information F2, the control timings are set such that, for example, the chemical solution is sprayed to the crops V or the spraying of the chemical solution is stopped in timing when the spraying units 14L and 14R reach the target position.

In addition, the control information generation processing unit 213 generates the control information F2 for controlling abnormality determination threshold (positional threshold) for determining abnormality of the deviation (positional deviation) of the work vehicle 10 with respect to the target route R. For example, when the work vehicle 10 deviates from the target route R during automatic traveling and the positional deviation exceeds the abnormality determination threshold, the vehicle control device 11 executes the correction operation processing or the traveling stop processing described above. The control information generation processing unit 213 registers the abnormality determination threshold corresponding to the position of the work vehicle 10 in the control information F2 (see FIG. 12). The control information generation processing unit 213 also registers, in the control information F2, the abnormality determination threshold for the right direction for determining abnormality when the work vehicle 10 is shifted to the right with respect to the target route R, and the abnormality determination threshold for the left direction for determining abnormality when the work vehicle 10 is shifted to the left with respect to the target route R (see FIG. 12).

For example, when the work vehicle 10 travels along the work route R1 with the crops V existing on both sides, that is, in the section where the work vehicle 10 performs the spraying work in the four-direction spray pattern, a high positional accuracy is required on both left and right sides. Therefore, the control information generation processing unit 213 sets the abnormality determination threshold for both the left and right directions to, for example, 15 cm (see FIG. 12). In the other hand, when the work vehicle 10 travels along the transfer route R2 with no crops V existing on both sides, that is, in the section where the work vehicle 10 does not perform the spraying work, the likeliness of coming into contact with the crops V is low, and a high position accuracy is not required. Therefore, the control information generation processing unit 213 sets the abnormality determination thresholds for both the left and right directions to, for example, 1 m (see FIG. 12).

In addition, for example, when the work vehicle 10 travels along the work route R1 with the crops V existing on the left side and the crops V not existing on the right side, that is, in the section (the section between the positions P11 and P12 illustrated in FIG. 13) where the work vehicle 10 performs the spraying work in the left three-direction spray pattern, a high positional accuracy is required on the left side because the crops of the crop row Vrc exist, and a high positional accuracy is not required on the right side because the crops V do not exist. In this case, the control information generation processing unit 213 sets the abnormality determination threshold for the left direction to 15 cm, and sets the abnormality determination threshold for the right direction to 1 m (upper limit value of the positional deviation) (see FIG. 12). As a result, when the work vehicle 10 is shifted to the left, for example, and the positional deviation exceeds 15 cm, the vehicle control device 11 executes the correction operation or the stopping processing. On the other hand, even when the work vehicle 10 is shifted to the right, for example, and the positional deviation is equal to or less than 1 m, the vehicle control device 11 does not execute the correction operation and the stopping processing and continues the automatic travel.

It is preferable to limit the cases in which the abnormality determination threshold for one of the left and right sides is relaxed (set to the upper limit of the positional deviation) than that for the other side, as described above, to cases in which the work vehicle 10 moves from the work route R1 (work area) to the transfer route R2 (non-work area) (to exit from the work area). Specifically, in the example illustrated in FIG. 13, the section between the positions P13 and P14 is a section in which the crops V exist on the right side of the work vehicle 10 and the crops V do not exist on the left side (section in which the work vehicle 10 performs the spraying work in the right one-direction spray pattern). Therefore, it is less likely for the work vehicle 10 to come into contact with the crops V of the crop row Vrh even when it is shifted to the left. Although the abnormality determination threshold in the left direction can be set to 1 m (upper limit of the positional deviation), the section between the positions P13 and P14 is the enter route to the work route R1 (crop row Vrg), and a high position accuracy is required when entering the work route R1. Therefore, even when the crops V do not exist on the left or right side when the work vehicle 10 moves from the transfer route R2 (non-work area) to the work route R1 (work area) (to enter the work area), the abnormality determination threshold is set to a strict value (here, 15 cm). For example, as illustrated in FIG. 12, the control information generation processing unit 213 sets the abnormality determination threshold in both the left and right directions corresponding to the position P13 to 15 cm. As a result, the work vehicle 10 automatically travels in the section after the position P13 with the abnormality determination threshold set to 15 cm for the left and right directions, respectively.

As described above, the control information generation processing unit 213 sets, in the route information (control information F2) of the work route with the crops V existing on one side and not existing on the other side of the target route R in the left and right directions of the work vehicle 10, a first threshold (15 cm in the above example) as the threshold (abnormality determination threshold) of the deviation amount (shift amount) corresponding to one side, and a second threshold (1 m in the above example) greater than the first threshold as the threshold of the deviation amount corresponding to the other side. In the route with the crops V existing only on one side of the left and right sides as described above, the control information generation processing unit 213 also sets the first threshold and the second threshold for the left side and the right side, respectively, for the route in which the work vehicle 10 exits from the work area to the non-work area, and sets the first threshold for both the left and right sides for the route in which the work vehicle 10 enters the work area from the non-work area.

According to the above configuration, the frequency of interruption of the automatic travel can be reduced by relaxing the abnormality determination threshold when the risk of contact with the crops V is low, even when the work vehicle 10 shifts its position (lateral shift). In addition, when the work vehicle 10 enters the work area from the non-work area, the abnormality determination threshold is made strict without relaxing it, thereby preventing contact with the crops V when entering the work area, and also preventing a decrease of work accuracy.

The output processing unit 214 outputs, to the work vehicle 10, the route data including the information of the target route R generated by the route generation processing unit 212 and the control information F2 (see FIG. 12) generated by the control information generation processing unit 213.

The output processing unit 214 may output the route data to a server (not illustrated).

The server may store and manage a plurality of pieces of the route data acquired from each of the plurality of operation terminals 20 in association with the operation terminals 20 and the work vehicle 10.

In addition to the above processing, the control unit 21 performs the processing to display various types of information on the operation display unit 23. For example, the control unit 21 displays, on the operation display unit 23, a registration screen for registering the work vehicle information, the field information, the work information, and the like, an operation screen for generating the target route R, an operation screen for starting the automatic travel of the work vehicle 10, a display screen for displaying the traveling state of the work vehicle 10, and the like.

The control unit 21 accepts various operations from the operator. Specifically, the control unit 21 accepts, from the operator, the work start instruction for causing the work vehicle 10 to start working, the traveling stop instruction for stopping the travel of the work vehicle 10 during the automatic travel, and the like. Once each instruction is accepted, the control unit 21 outputs the instruction to the work vehicle 10.

When the work start instruction is acquired from the operation terminal 20, the vehicle control device 11 of the work vehicle 10 starts the automatic travel and the spraying work of the work vehicle 10. Upon acquisition of the traveling stop instruction from the operation terminal 20, the vehicle control device 11 stops the automatic travel and the spraying work of the work vehicle 10.

The operation terminal 20 may be accessible to the website of an agricultural support service provided by the server (agricultural support site) via the communication network N1. In this case, the operation terminal 20 can function as the operation terminal for the server by executing a browser program by the control unit 21.

### Automatic Travel Processing

With reference to FIG. 14, an example of the automatic travel processing executed by the vehicle control device 11 of the work vehicle 10 is described.

The present invention can be understood as the invention of the automatic traveling method for executing one or more steps included in the automatic travel processing. One or more steps included in the automatic traveling processing described herein may be appropriately omitted. The steps in the automatic traveling processing may be executed in a different order as long as the same functional effect is acquired. Although the case in which the vehicle control device 11 executes each step in the automatic traveling processing is taken as an example here, the automatic traveling method in which one or more processors execute the steps in the automatic traveling processing in a distributed manner is also considered as another possible embodiment.

In step S1, the vehicle control device 11 determines whether the work start instruction is acquired from the operation terminal 20. For example, when the operator presses the start button on the operation terminal 20, the operation terminal 20 outputs the work start instruction to the work vehicle 10. If the vehicle control device 11 acquires the work start instruction from the operation terminal 20 (S1: Yes), the processing proceeds to step S2. The vehicle control device 11 stands by until acquiring the work start instruction from the operation terminal 20 (S1: No).

In step S2, the vehicle control device 11 controls the traveling device 13 to cause the work vehicle 10 to start the automatic travel. For example, upon acquisition of the work start instruction and the route data from the operation terminal 20, the vehicle control device 11 causes the work vehicle 10 to start the automatic travel along the target route R included in the route data. The route information includes, for example, the information on the target route R generated by the operation terminal 20 (see FIG. 6), and the control information F2 for setting the spray pattern and the abnormality determination threshold (see FIG. 12). The vehicle control device 11 stores the route data acquired from the operation terminal 20 in the storage unit 12.

Subsequently, in step S3, the vehicle control device 11 determines whether the work vehicle 10 has reached a predetermined position (for example, a turning end position) on the pre-spray route continuing to the work route R1. For example, as illustrated in FIG. 9, when the work vehicle 10 turns in the turning route r4 and enters the pre-spray straight route r5, the vehicle control device 11 determines whether the work vehicle 10 has reached the turning end position P4. If it is determined that the work vehicle 10 has reached the turning end position P4 (S3:Yes), the vehicle control device 11 shifts the process to step S4. If it is determined that the work vehicle 10 has not reached the turning end position P4 (S3:No), the vehicle control device 11 shifts the process to step S10.

In step S4, the vehicle control device 11 causes the work vehicle 10 to make a spin turn by a predetermined angle so as to match the direction of the target route R. For example, as illustrated in FIG. 9, if the position at which the work vehicle 10 finishes turning on the turning route r4 is the position P5, which is distanced from the turning end position P4 by the distance ma, the vehicle control device 11 causes the work vehicle 10 to make a spin turn at the position P5 to match the direction of the target route r5.

Subsequently, in step S5, the vehicle control device 11 determines whether the deviation of the work vehicle 10 is equal to or less than the threshold. For example, after the work vehicle 10 is spun at the position P5 (see FIG. 9), the vehicle control device 11 determines whether the deviation (the positional deviation and the azimuth deviation) of the work vehicle 10 with respect to the target route r5 is equal to or less than the threshold (whether the automatic travel start condition is satisfied). If the deviation of the work vehicle 10 is equal to or less than the threshold (S5:Yes), the vehicle control device 11 shifts the process to step S10. On the other hand, if it is determined that the deviation of the work vehicle 10 exceeds the threshold (S5:No), the vehicle control device 11 shifts the process to step S6 and executes the correction operation below.

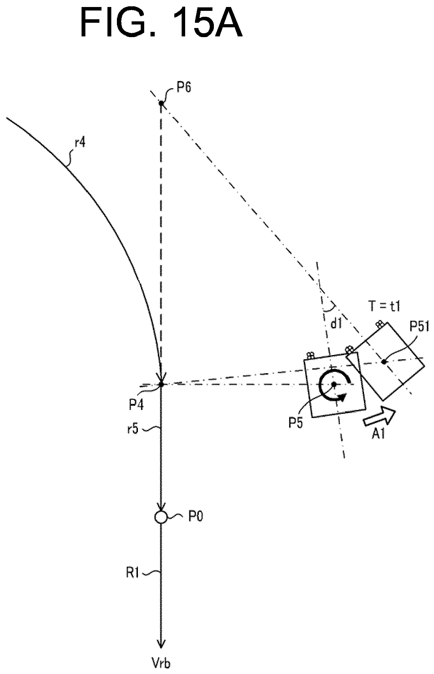

In step S6, the vehicle control device 11 causes the work vehicle 10 to make a spin turn so as to match the direction of the target position (backward movement target position) when moving the work vehicle 10 backward. For example, as illustrated in FIG. 15A, the vehicle control device 11 sets a virtual target position P6 on the extension line of the work route R1, and causes the work vehicle 10 to make a spin turn at the position P5 so as to match the direction of the target position P6.

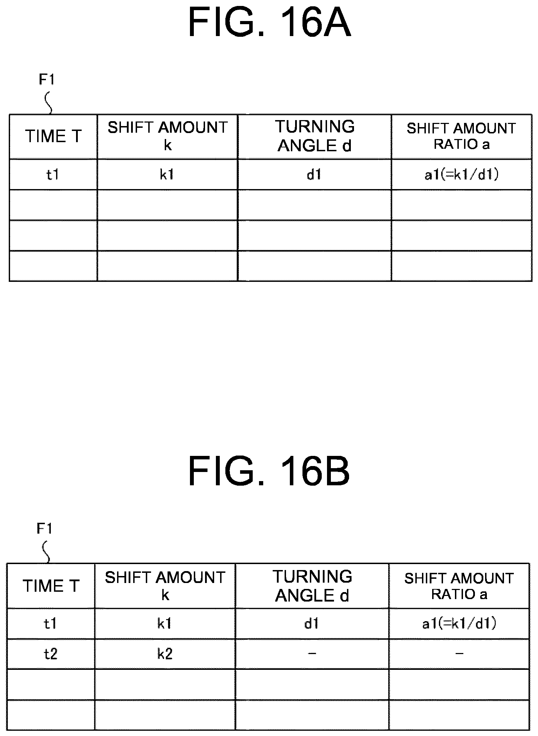

The vehicle control device 11 acquires the shift amount of the lateral shift of the work vehicle 10 from the position P5 to the position P51 during the spin turn by a predetermined angle, and stores the shift amount in the deviation information F1 by associating the turning angle of the spin turn and the shift amount with each other. Here, it is assumed that the work vehicle 10 is laterally shifted from the position P5 by a shift amount k1 when making the spin turn by a turning angle d1. In this case, as illustrated in FIG. 16A, the vehicle control device 11 stores the shift amount k1 and the turning angle d1 in association with time t1 at which the work vehicle 10 has made a spin turn at the position P5. The vehicle control device 11 also calculates a ratio (shift amount ratio a1) of the shift amount k1 (shift amount per turning angle) to the turning angle d1 and stores the ratio in the deviation information F1.

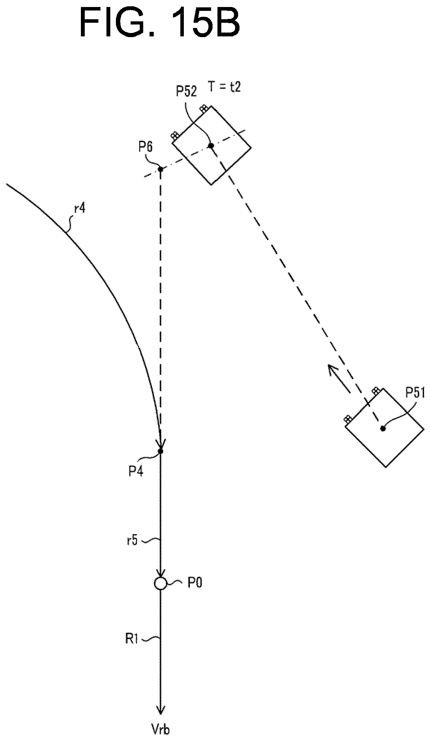

Subsequently, in step S7, the vehicle control device 11 causes the work vehicle 10 to move backward. For example, as illustrated in FIG. 15B, the vehicle control device 11 causes the work vehicle 10 to move backward toward the target position P6 (backward movement target position).

When the work vehicle 10 moves backward from the position P51 to the target position P6, if the work vehicle 10 is laterally shifted from the target position P6 to the position P52, the vehicle control device 11 acquires the shift amount and stores it in the deviation information F1. It is assumed that the work vehicle 10 is laterally shifted from the target position P6 by a shift amount k2 when moving backward. In this case, as illustrated in FIG. 16B, the vehicle control device 11 stores the shift amount k2 in association with time t2 at which the backward movement is started at the position P52.

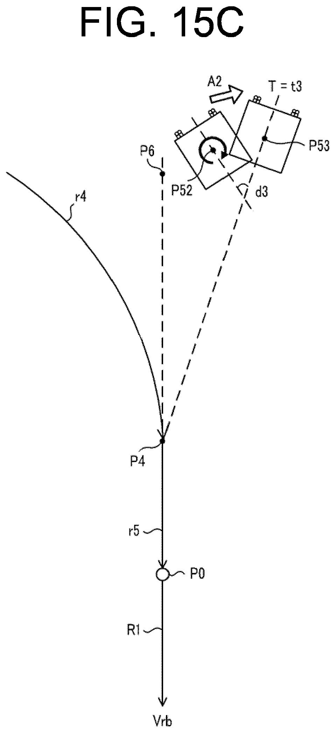

Subsequently, in step S8, the vehicle control device 11 causes the work vehicle 10 to make a spin turn so as to match the direction of the target position (forward movement target position) when causing the work vehicle 10 to move forward. For example, as illustrated in FIG. 15C, the vehicle control device 11 sets the turning end position P4 as the target position, and causes the work vehicle 10 to make a spin turn at the position P52 so as to match the direction of the turning end position P4.

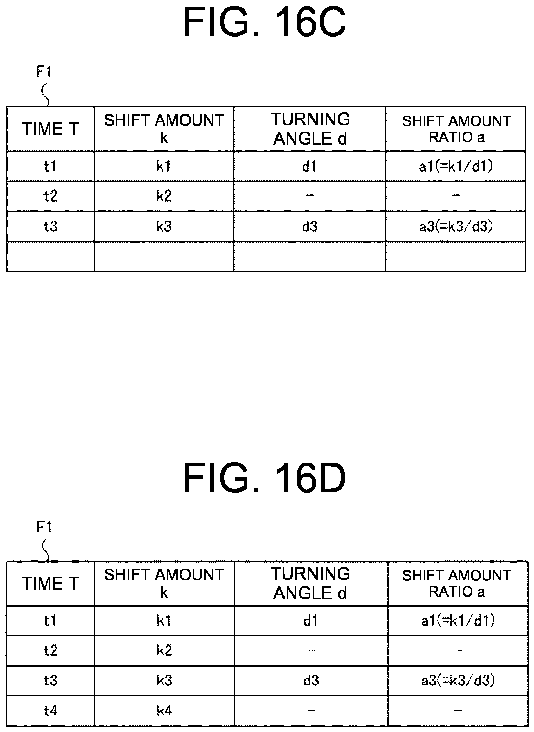

When the work vehicle 10 makes a spin turn by a predetermined angle, if the work vehicle 10 is laterally shifted from the position P52 to the position P53, the vehicle control device 11 acquires the shift amount and stores it in the deviation information F1 by associating the turning angle of the spin turn and the shift amount with each other. It is assumed that the work vehicle 10 is laterally shifted from the position P52 by a shift amount k3 during the spin turn by an angle d3. In this case, as illustrated in FIG. 16C, the vehicle control device 11 stores the shift amount k3 and the turning angle d3 in association with time t3 at which the work vehicle 10 has made a spin turn at the position P52. The vehicle control device 11 calculates a ratio (shift amount ratio a3) of the shift amount k3 (shift amount per turning angle) to the turning angle d3 and stores the ratio in the deviation information F1.

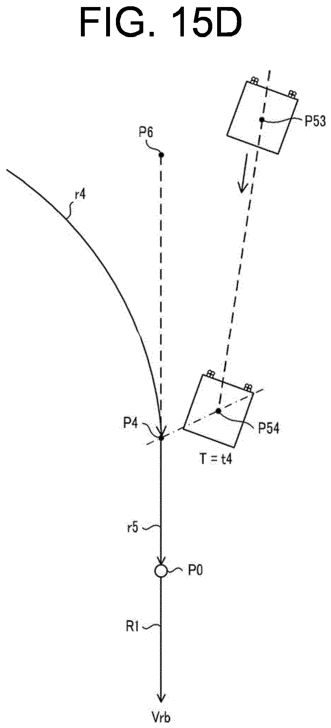

Subsequently, in step S9, the vehicle control device 11 causes the work vehicle 10 to move forward. For example, as illustrated in FIG. 15D, the vehicle control device 11 causes the work vehicle 10 to move forward toward the turning end position P4 (forward movement target position).

When the work vehicle 10 moves forward from the position P53 to the turning end position P4 and is shifted from the turning end position P4 to the position P54, the vehicle control device 11 acquires the shift amount and stores it in the deviation information F1. It is assumed that the work vehicle 10 is laterally shifted from the turning end position P4 by a shift amount k4 when moving straight. In this case, as illustrated in FIG. 16D, the vehicle control device 11 stores the shift amount k4 in association with time t4 at which the forward movement is started at the position P53.

After step S9, the vehicle control device 11 shifts the process to step S4, and again causes the work vehicle 10 to make a spin turn by a predetermined angle so as to match the target route R. For example, as illustrated in FIG. 15D, the vehicle control device 11 causes the work vehicle 10 to make a spin turn at the position P54 so as to match the target route r5.

If the deviation of the work vehicle 10 with respect to the target route r5 is equal to or less than the threshold at the time when the work vehicle 10 is made to make a spin turn at the position P54 (S5:Yes), the vehicle control device 11 shifts the process to step S10. If the deviation of the work vehicle 10 still exceeds the threshold (S5:No), the vehicle control device 11 shifts the process to step S6 and executes the correction operation again.

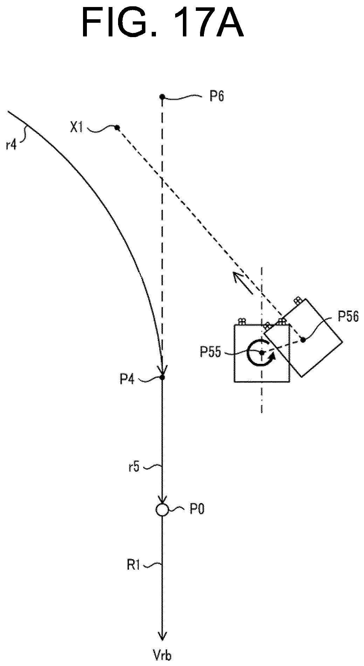

Specifically, the vehicle control device 11 executes the correction operation again from a state in which the work vehicle 10 has made a spin turn at the position P54 and is shifted to the position P55 (see FIG. 17A). For example, in step S6, as illustrated in FIG. 17A, the vehicle control device 11 causes the work vehicle 10 to make a spin turn so as to match the direction of the target position (backward movement target position) when the work vehicle 10 is moved backward.

Here, the vehicle control device 11 determines the target position X1 corresponding to the target position P6 by considering the shift amount (shift amount k1 from the position P5 to the position P51 in FIG. 15A (see FIG. 16A)) in the previous correction operation at during the spin turn immediately before the backward movement, and also considering the shift amount (shift amount k2 when moving from the position P51 to the position P52 in FIG. 15B (see FIG. 16B)) in the previous correction operation during the backward movement after the spin turn.

For example, the vehicle control device 11 calculates the shift amount with respect to the turning angle of the work vehicle 10 using the shift amount ratio a1 corresponding to the spin turn immediately before the backward movement. For example, as illustrated in FIG. 17A, the vehicle control device 11 calculates the shift amount corresponding to the spin turn immediately before the backward movement using the shift rate a1 when the turning angle is an angle da during the turn of the work vehicle 10 so as to align its azimuth to the target position P6 at the position P55.

The vehicle control device 11 also acquires the shift amount during the backward movement after the spin turn in the previous correction operation. In the previous correction operation, the vehicle control device 11 may calculate a ratio of the shift amount (shift amount per backward movement distance) corresponding to the backward movement, and calculate the shift amount corresponding to the distance from the position P55 to the target position P6 using the calculated ratio.

The vehicle control device 11 determines the target position X1 at a position obtained by shifting the target position P6 based on the calculated shift amount corresponding to the spin turn immediately before the backward movement and the shift amount at the time of the backward movement after the spin turn in the previous correction operation.

As illustrated in FIG. 17A, when the target position X1 is determined the vehicle control device 11 causes the work vehicle 10 to make a spin turn at the position P55 so as to match the direction of the target position X1 (S6). The vehicle control device 11 updates the shift amount k1 and the turning angle d1 of the deviation information F1 when the shift amount is acquired while the work vehicle 10 makes a spin turn and is laterally shifted from the position P55 to the position P56.

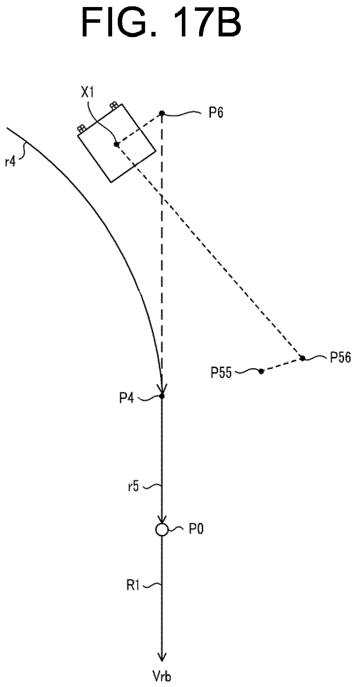

In step S7, the vehicle control device 11 causes the work vehicle 10 to move backward toward the target position X1 (backward movement target position) (see FIG. 17B). When the vehicle control device 11 acquires the shift amount relative to the target position P6 during the backward movement of the work vehicle 10 from the position P56 toward the target position X1,and updates the shift amount k2 of the deviation information F1.

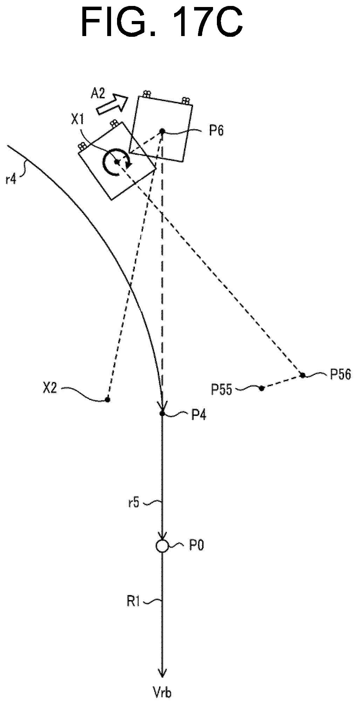

In step S8, as illustrated in FIGS. 17B and 17C, the vehicle control device 11 causes the work vehicle 10 to make a spin turn so as to match the direction of the target position (forward movement target position) when the work vehicle 10 moves forward.

Here, the vehicle control device 11 determines the target position X2 corresponding to the target position (turning end position P4) by considering the shift amount (shift amount k3 from the position P52 to the position P53 in FIG. 15C (see FIG. 16C)) in the previous correction operation during the spin turn immediately before the forward movement, and also considering the shift amount (shift amount k4 when moving from the position P53 to the position P54 in FIG. 15D) (see FIG. 16D)) in the previous correction operation during the forward movement after the spin turn.

For example, the vehicle control device 11 calculates the shift amount with respect to the turning angle of the work vehicle 10 using the shift amount ratio a3 corresponding to the spin turn immediately before the forward movement. For example, as illustrated in FIG. 17C, the vehicle control device 11 calculates the shift amount corresponding to the spin turn immediately before the forward movement at the target position X1, using the shift amount ratio a3 when the turning angle is db during the turn of the work vehicle 10 to face its azimuth to the turning end position P4.

The vehicle control device 11 acquires the shift amount in the previous correction operation during the forward movement after the spin turn. The vehicle control device 11 may calculate the shift amount ratio (shift amount per forward movement distance) according to the forward movement distance in the previous correction operation, and use the calculated ratio to calculate the shift amount according to the distance from the target position X1 to the turning end position P4.

The vehicle control device 11 determines the target position X2 at a shifted target position corresponding to the turning end position P4 based on the calculated shift amount corresponding to the spin turn immediately before the forward movement and the shift amount during the forward movement after the spin turn in the previous correction operation.

Once the target position X2 is determined, as illustrated in FIG. 17C, the vehicle control device 11 causes the work vehicle 10 to make a spin turn at the target position X1 so as to match the direction of the target position X2 (S8).

The vehicle control device 11 updates the shift amount k3 and the turning angle d3 of the deviation information F1 upon acquisition of the shift amount when the work vehicle 10 makes the spin turn and is shifted laterally from the target position X1 to the position P6.

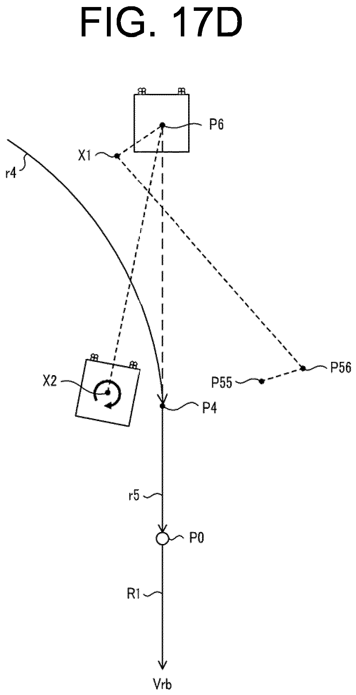

In step S9, the vehicle control device 11 causes the work vehicle 10 to move forward toward the target position X2 (forward movement target position) (see FIG. 17D). The vehicle control device 11 updates the shift amount k4 of the deviation information F1 upon acquisition of the shift amount with respect to the turning end position P4 when the work vehicle 10 moves backward from the position P6 to the target position X2.

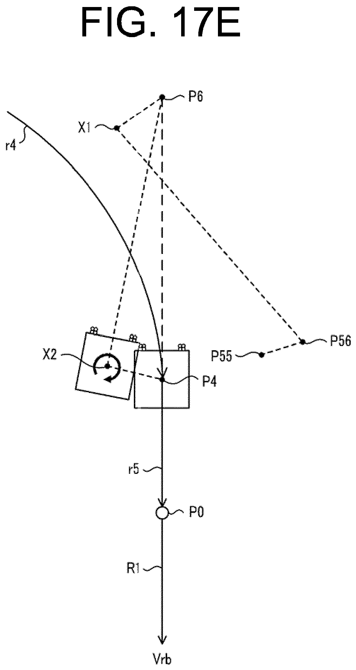

After step S9, the vehicle control device 11 shifts the process to step S4, and again causes the work vehicle 10 to make a spin turn by a predetermined angle so as to match the direction of the target route R. For example, as illustrated in FIG. 17E, the vehicle control device 11 causes the work vehicle 10 to make a spin turn at the target position X2 so as to match the direction of the target route r5. If the deviation of the work vehicle 10 from the target route r5 becomes equal to or less than the threshold (S5: Yes), the vehicle control device 11 shifts the process to step S10.

If the deviation of the work vehicle 10 still exceeds the threshold (S5:No), the vehicle control device 11 shifts the process to step S6, and executes the correction operation again using the updated deviation information F1.

In this way, the vehicle control device 11 updates the deviation information F1 until the deviation of the work vehicle 10 becomes equal to or less than the thresholds, and repeatedly executes the correction operation using the updated deviation information F1.

When the deviation of the work vehicle 10 becomes equal to or less than the reference value, in step S10, the vehicle control device 11 determines whether the work vehicle 10 has finished the work. The vehicle control device 11 determines that the work has ended when the position of the work vehicle 10 matches the work end position G. If the work vehicle 10 finishes the work (S10: Yes), the automatic travel process ends. If the work vehicle 10 has not finished the work (S10: No), the vehicle control device 11 repeats steps S3 to S9 while allowing the work vehicle 10 to continue the automatic travel.

In the automatic traveling processing described so far, the method of determining the target positions X1 and X2 is not limited to the method described above. Alternatively, the vehicle control device 11 may determine the target position X1 corresponding to the target position P6 by considering the shift amount (shift amount k1 from the position P5 to the position P51 in FIG. 15A (see FIG. 16A)) in the previous correction operation during the spin turn immediately before the backward movement, considering the shift amount (shift amount k2 when moving from the position P51 to the position P52 in FIG. 15B) in the previous correction operation during the backward movement after the spin turn, and also considering the shit amount k3 (shift amount k3 from the position P52 to the position P53 in FIG. 15C) in the previous correction operation during the spin turn after the backward movement. The vehicle control device 11 may also determine the target position X2 corresponding to the target position (turning end position P4) by considering the shift amount (shift amount k3 from the position P52 to the position P53 in FIG. 15C (see FIG. 16C)) in the previous correction operation during the spin turn immediately before the forward movement, considering the shift amount (shift amount k4 when moving from the position P53 to the position P54 in FIG. 15D (see FIG. 16D)) in the previous correction operation during the forward movement after the spin turn, and also considering the shift amount k3 (shift amount k3 from the position P52 to the position P53 in FIG. 15C (see FIG. 16C) in the previous correction operation during the spin turn after the backward movement.

As described above, the automatic traveling system 1 according to the present embodiment causes the work vehicle 10 to automatically travel along the target route R in the work field (for example, the field F), and when the deviation including at least the positional deviation or the azimuth deviation of the work vehicle 10 with respect to the target route R exceeds the threshold, executes the correction operation for correcting the deviation using the shift amount (positional deviation, azimuth deviation) of the work vehicle 10 generated in the past correction operation.

According to the above-described configuration, when the positional shift, the azimuth shift, or the like occurs when the work vehicle 10 is shifted from the target route R, the correction operation is executed by considering the shift amount (for example, the slide down amount due to the slope during turning) in executing the past correction operation, thus allowing the work vehicle 10 to return to the target route R with a small number of correction operations. This enhances the work efficiency of work of the work vehicle 10.

In the above configuration, when the correction operation is executed multiple times successively at a location where the deviation exceeds the threshold, the automatic traveling system 1 may execute the current correction operation using the shift amount corresponding to the previous correction operation. For example, the automatic traveling system 1 updates the deviation information F1 (see FIGS. 16A to 16D) every time the correction operation is performed, thus always performing the correction operation using the latest deviation information F1. In this way, executing the correction operation by considering the shift amount during the previous (immediately preceding) correction operation allows execution of the correction operation that accurately reflects the current state of the work field (field F).

In the above configuration, when the automatic traveling system 1 acquires the first shift amount when the work vehicle 10 turns and the second shift amount when the work vehicle 10 moves forward or backward in the previous correction operation, the automatic traveling system 1 may determine the target position based on the first shift amount and the second shift amount and move the work vehicle 10 to the target position in the current correction operation. This allows the target position for the correction operation to be set at the position shifted from the original target position in the correction operation.

In the above configuration, the automatic traveling system 1 may also calculate the shift amount ratio which is the shift amount per turning angle based on the first shift amount, and may determine the target position by calculating the shift amount during turning based on the shift amount ratio in the current correction operation. By the use of the shift amount ratio in the previous correction operation, the shift amount during turning of the work vehicle 10 in the current correction operation can be predicted, achieving the accurate setting of the target position.

### Other Embodiments

The present invention is not limited to the above-described embodiment. Other embodiments of the present invention are described below.

In the above embodiment, the vehicle control device 11 executes the correction operation, for example, when the deviation exceeds the threshold at the position of entering the work route R1 of the crop row Vrb (turning end position P4), and to use the shift amount of the past (for example, the last time) correction operation at that position when repeating the correction operation. That is, when the vehicle control device 11 repeats the correction operation three times successively at the same position, the vehicle control device 11 uses the shift amount generated in the first correction operation in the second correction operation, and uses the shift amount generated in the second correction operation in the third correction operation.

In another embodiment, when the vehicle control device 11 repeats the correction operation three times successively at the same position, the vehicle control device 11 may use the shift amount generated in the first correction operation in both the second and third correction operations.

In still another embodiment, the vehicle control device 11 may execute the current correction operation using the shift amount in the correction operation at a location different from the location where the current correction operation is to be performed. For example, the vehicle control device 11 executes the correction operation corresponding to the work route R1a using the shift amount generated in the correction operation in the work route R1b (the route worked on immediately before) adjacent to the work route R1a on which the correction operation is to be performed.

When the field F is inclined, for example, the shift amount can be changed according to the inclined direction with respect to the traveling direction. For example, the shift amount when climbing the slope and the shift amount when descending the slope may differ from each other. Therefore, the vehicle control device 11 may perform the correction operation corresponding to the work route R1a by using the shift amount caused by the correction operation in the work route of the previous work (already worked) before the work route R1a for which the correction operation should be performed, which has the same direction of inclination with respect to the traveling direction (work direction).

In still another embodiment, when the correction operation has been performed at the same position on a different work day in the past, the vehicle control device 11 may use the shift amount generated in the correction operation on the different day to perform the current correction operation. According to this configuration, the past shift amount can be used in the first correction operation of the work of the day at the location where the correction operation becomes necessary.

In still another embodiment, the vehicle control device 11 may detect the inclination angle and the surface soil state (road surface state) of the field F by a camera, a sensor, or the like, and may use the past shift amount according to the detection result. For example, the inclination angle, the surface soil state, and the like of each work route are detected before starting the work or in the past work, while the shift amount during turning and the shift amount during the forward and backward movement are acquired during the automatic travel and the correction operation according to the target route R, and travel history information associated with the detection result is stored. The vehicle control device 11 uses the previously stored travel history information in the current correction operation. For example, the vehicle control device 11 detects the inclination angle of the position where the correction operation is performed, acquires the shift amount corresponding to the detected inclination angle from the travel history information, and performs the correction operation using the acquired shift amount. According to this configuration, the shift amount corresponding to the inclination angle and the surface soil condition can be used regardless of the location of the field F. For example, the correction operation considering the shift amount can be executed even in the first correction operation.

### Obstacle Detection Processing

A specific configuration of obstacle detection processing is described below. In the automatic traveling system 1, the obstacle detection device 17 detects the object to be detected in the field F with the detection unit (lidar sensor or ultrasonic sensor) provided in the work vehicle 10. The vehicle control device 11 determines whether the detected object is the obstacle based on the measurement information regarding the detected object acquired from the obstacle detection device 17, and executes avoidance processing (travel restriction processing) for causing the work vehicle 10 to avoid the obstacle when it is determined that the detected object is the obstacle.

Specifically, the vehicle control device 11 sets a plurality of obstacle determination areas Ar according to the travel mode (travel area) of the work vehicle 10.

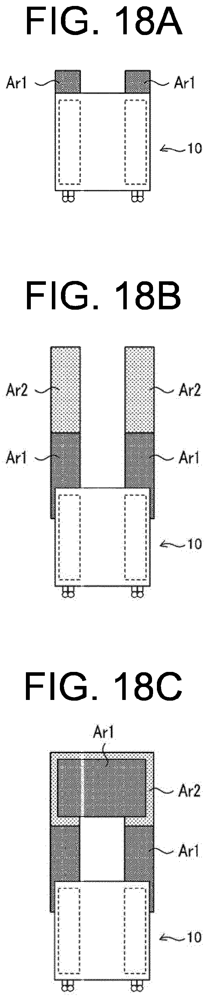

FIGS. 18A to 18F illustrate a plurality of obstacle determination areas Ar1 and Ar2 set according to the traveling area of the work vehicle 10. The obstacle determination area Ar1 indicates a stoppage determination area in which the work vehicle 10 is stopped, and the obstacle determination area Ar2 indicates a deceleration determination area in which the work vehicle 10 is decelerated. The number of obstacle determination areas is not limited to two areas, and may be three or more areas.

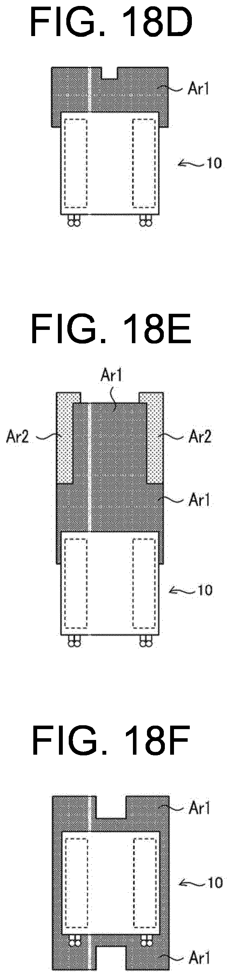

FIG. 18A illustrates an example of the obstacle determination area Ar1 set when the work vehicle 10 enters the work area (crop row) (row entry mode). FIG. 18B illustrates an example of the obstacle determination areas Ar1 and Ar2 set when the work vehicle 10 travels within the work area (within the crop row) (in-row mode). FIG. 18C illustrates an example of the obstacle determination areas Ar1 and Ar2 are set when the work vehicle 10 travels at the end of the crop row (row end mode). FIG. 18D illustrates an example of the obstacle determination area Ar1 set when the work vehicle 10 travels at a low speed in the non-work area (headland area) (headland low-speed mode). FIG. 18E illustrates an example of the obstacle determination areas Ar1, Ar2 set when the work vehicle 10 travels at a high speed in the non-work area (headland area) (headland high-speed mode). FIG. 18F illustrates an example of the obstacle determination area Ar1 set when the work vehicle 10 spins or moves backward (spin turn/backward movement mode).

In this way, the vehicle control device 11 sets the wider obstacle determination area Ar (detection range) when the vehicle speed is high, and sets the narrower obstacle determination area Ar when the vehicle speed is low. The vehicle control device 11 also sets the obstacle determination area Ar in the back of the vehicle body in the case of the spin turn or the backward movement. When the vehicle body straddles the crop row Vr, the vehicle control device 11 excludes a space between the left body (left unit 100L) and the right side body (right unit 100R) from the detection range.

The vehicle control device 11 acquires information on the position and traveling conditions (for example, traveling method or traveling mode) of the work vehicle 10 based on the target route R generated in advance for the field F in the operation terminal 20. The vehicle control device 11 sets the obstacle determination area Ar corresponding to the acquired information among the obstacle determination areas Ar illustrated in FIGS. 18A to 18F, and executes the obstacle determination processing. When the obstacle is detected in the obstacle determination area Ar2, the vehicle control device 11 switches the vehicle speed of the work vehicle 10 to a low speed. When the obstacle is detected in the obstacle determination area Ar1, the vehicle control device 11 stops the work vehicle 10.

In this way, the vehicle control device 11 dynamically changes the obstacle determination area Ar (detection range) based on the position and the traveling condition of the work vehicle 10. This prevents unnecessary detection of objects that do not obstruct the travel of the work vehicle 10 as obstacles, thus preventing a decrease in work efficiency.

In the obstacle determination processing, the vehicle control device 11 may execute an exclusion processing of excluding the object to be detected from objects subjected to travel restriction when a predetermined condition is satisfied.

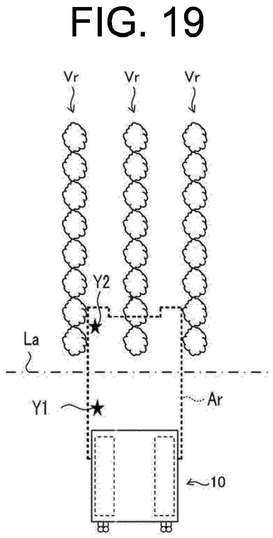

For example, as illustrated in FIG. 19, when the work vehicle 10 is located in the non-work area and the obstacle detection device 17 detects an object to be detected Y1 at a position not exceeding the boundary (reference line) between the non-work area and the work area, the vehicle control device 11 recognizes the object to be detected Y1 as the obstacle subjected to travel restriction. In this case, the vehicle control device 11 executes the traveling restriction processing (deceleration or stoppage) when the object Y1 is detected.

On the other hand, for example, as illustrated in FIG. 19, when the work vehicle 10 is located in the non-work area and the obstacle detection device 17 detects an object to be detected Y2 at a position beyond the boundary (reference line La) between the non-work area and the work area, the vehicle control device 11 excludes the object to be detected Y2 from the obstacles subjected to travel restriction. In this case, the vehicle control device 11 does not execute the travel restriction processing even when the object Y2 is detected.

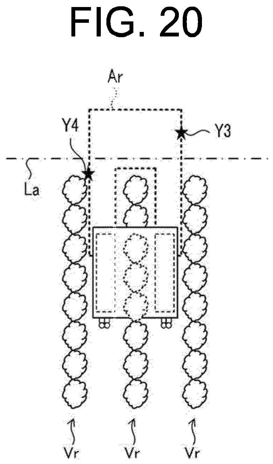

For example, as illustrated in FIG. 20, when the work vehicle 10 is located in the work area and the obstacle detection device 17 detects an object to be detected Y3 at a position beyond the boundary (reference line La) between the non-work area and the work area, the vehicle control device 11 recognizes the object Y3 as the obstacle subjected to the travel restriction. In this case, the vehicle control device 11 performs the travel restriction processing (deceleration or stoppage) when the object Y3 is detected.

On the other hand, for example, as illustrated in FIG. 20, when the work vehicle 10 is located in the work area and the obstacle detection device 17 detects an object to be detected Y4 at a position not exceeding the boundary (reference line La) between the non-work area and the work area, the vehicle control device 11 excludes the object to be detected Y4 from the obstacles subjected to the travel restriction. In this case, the vehicle control device 11 does not execute the travel restriction processing even when the object Y4 is detected.

As described above, the vehicle control device 11 according to the present embodiment sets the detection range (obstacle determination area Ar) for detecting the object to be detected according to the traveling conditions (traveling position, traveling method (for example, turning or forward/backward), vehicle speed, and the like) of the work vehicle 10, In cases where the work vehicle 10 automatically travels in the work area and the work vehicle 10 automatically travels in the non-work area, the configuration may restrict the travel of the work vehicle 10 when the object is detected in the non-work area, and may not restrict the travel of the work vehicle 10 when the object is detected in the work area.

The automatic traveling system 1 according to the present embodiment can also be configured by appropriately combining the above-described embodiments.

### REFERENCE SIGNS LIST

- 1:: automatic traveling system
- 10:: work vehicle
- 11:: vehicle control device
- 12:: storage unit
- 13:: traveling device
- 14:: spraying device
- 15:: communication unit
- 16:: positioning device
- 17:: obstacle detection device
- 20:: operation terminal
- 21:: control unit
- 22:: storage unit
- 23:: operation display unit
- 24:: communication unit
- 111:: travel processing unit
- 112:: detection processing unit
- 113:: correction processing unit
- 211:: setting processing unit
- 212:: route generation processing unit
- 213:: control information generation processing unit
- 214:: output processing unit
- F:: field (work field)
- R:: target route
- R1:: work route
- R2:: transfer route
- F1:: deviation information
- F2:: control information
- P0:: end point
- P1:: turning start position
- P2:: turning end position
- P4:: turning end position
- P6:: target position
- X1:: target position
- X2:: target position
- V:: crop
- Vr:: crop row

## Claims

1. An automatic traveling method comprising:
causing a work vehicle (10) to automatically travel along a target route (R) in a work field (F); and
**characterized in that** the automatic traveling method further comprises executing a correction operation of correcting a deviation using a shift amount of the work vehicle (10) generated in a past correction operation when the deviation which includes at least a positional deviation or an azimuth deviation of the work vehicle (10) with respect to the target route (R) exceeds a threshold.

2. The automatic traveling method according to claim 1, wherein
when the correction operation is performed multiple times successively at a location where the deviation exceeds the threshold, a current correction operation is executed using the shift amount corresponding to the previous correction operation.

3. The automatic traveling method according to claim 2, wherein
when a first shift amount during turning of the work vehicle (10) and a second shift amount in forward movement or backward movement of the work vehicle (10) in a previous correction operation are acquired, a target position (X1, X2) is determined based on the first shift amount and the second shift amount in the current correction operation, and the work vehicle (10) is moved to the target position (X1, X2).

4. The automatic traveling method according to claim 3, wherein
a shift amount ratio which is a shift amount per turning angle is calculated based on the first shift amount, and in the current correction operation, the target position (X1, X2) is determined by calculating a shift amount during turning based on the shift amount ratio.

5. The automatic traveling method according to any one of claims 1 to 4, wherein
the correction operation is stopped and the work vehicle (10) is stopped when the number of times of execution of the correction operation reaches a predetermined number of times or when a predetermined time has passed after the correction operation is started.

6. The automatic traveling method according to any one of claims 1 to 4, wherein
a permission condition that allows the start of automatic driving along the target route (R) after the correction operation is executed in a non-work area is relaxed compared to a permission condition in a work area.

7. The automatic traveling method according to any one of claims 1 to 4, wherein
when the correction operation is executed within a predetermined time after the automatic travel of the work vehicle (10) is started, the work vehicle (10) is stopped for a predetermined time to report predetermined warning information.

8. The automatic traveling method according to any one of claims 1 to 4, further comprising:
executing detection of an object to be detected in the work field (F), wherein
a detection range for detecting the object to be detected is set according to a travel condition of the work vehicle (10),
the travel of the work vehicle (10) is restricted when the object to be detected is detected in a non-work area, and
the travel of the work vehicle (10) is unrestricted when the object to be detected is detected in a work area.

9. The automatic traveling method according to any one of claims 1 to 4, wherein
when the work vehicle (10) is made to travel automatically while performing a predetermined work on an object to be worked arranged in a plurality of rows (Vr) in the work field (F),
in route information of a work route (R1), of the target route (R), in which the object to be worked exists on one side of the work vehicle (10) in left and right directions and no object to be worked exists on another side of the work vehicle (10) in the left and right directions, a first threshold is set as a threshold of the shift amount corresponding to the one side of the work vehicle (10), and a second threshold greater than the first threshold is set as the threshold of the shift amount corresponding to the other side of the work vehicle (10).

10. An automatic traveling program product causing one or more processing units (111, 112, 113, 211, 212, 213, 214) to execute the automatic traveling method according to any one of claims 1 to 4.

11. An automatic traveling system (1) comprising:
a travel processing unit (111) that is configured to cause a work vehicle (10) to automatically travel along a target route (R) in a work field (F);
**characterized in that** the automatic traveling system further comprises a correction processing unit (113) that is configured to execute a correction operation of correcting a deviation using a shift amount of the work vehicle (10) generated in a past correction operation when the deviation including at least a positional deviation or an azimuth deviation of the work vehicle (10) with respect to the target route (R) exceeds a threshold.

12. A work vehicle (10) comprising:
the automatic traveling system (1) according to claim 11; and
a traveling device configured to be controlled by the automatic traveling system (1).

## Patentansprüche

1. Automatisches Fahrverfahren, umfassend:
Veranlassen eines Arbeitsfahrzeugs (10), automatisch entlang einer Zielroute (R) in einem Arbeitsfeld (F) zu fahren; und
**dadurch gekennzeichnet, dass** das automatische Fahrverfahren ferner das Ausführen einer Korrekturoperation zum Korrigieren einer Abweichung unter Verwendung eines Verschiebungsbetrags des Arbeitsfahrzeugs (10) umfasst, der in einer vergangenen Korrekturoperation erzeugt wurde, wenn die Abweichung, die mindestens eine Positionsabweichung oder eine Azimutabweichung des Arbeitsfahrzeugs (10) in Bezug auf die Zielroute (R) umfasst, einen Schwellenwert überschreitet.

2. Automatisches Fahrverfahren nach Anspruch 1, wobei
wenn die Korrekturoperation mehrere Male aufeinanderfolgend an einer Stelle durchgeführt wird, wo die Abweichung den Schwellenwert überschreitet, eine gegenwärtige Korrekturoperation unter Verwendung des Verschiebungsbetrags ausgeführt wird, welcher der vorhergehenden Korrekturoperation entspricht.

3. Automatisches Fahrverfahren nach Anspruch 2, wobei
wenn ein erster Verschiebungsbetrag während des Drehens des Arbeitsfahrzeugs (10) und ein zweiter Verschiebungsbetrag in der Vorwärtsbewegung oder Rückwärtsbewegung des Arbeitsfahrzeugs (10) in einer vorhergehenden Korrekturoperation erfasst werden, eine Zielposition (X1, X2) auf der Grundlage des ersten Verschiebungsbetrags und des zweiten Verschiebungsbetrags in der gegenwärtigen Korrekturoperation bestimmt wird und das Arbeitsfahrzeug (10) zur Zielposition (X1, X2) bewegt wird.

4. Automatisches Fahrverfahren nach Anspruch 3, wobei
ein Verschiebungsbetragsverhältnis, das ein Verschiebungsbetrag pro Drehwinkel ist, auf der Grundlage des ersten Verschiebungsbetrags berechnet wird und in der gegenwärtigen Korrekturoperation die Zielposition (X1, X2) durch Berechnen eines Verschiebungsbetrags während des Drehens auf der Grundlage des Verschiebungsbetragsverhältnisses bestimmt wird.

5. Automatisches Fahrverfahren nach einem der Ansprüche 1 bis 4, wobei
die Korrekturoperation angehalten wird und das Arbeitsfahrzeug (10) angehalten wird, wenn die Anzahl der Male der Ausführung der Korrekturoperation eine vorbestimmte Anzahl von Malen erreicht oder wenn eine vorbestimmte Zeit nach dem Beginn der Korrekturoperation verstrichen ist.

6. Automatisches Fahrverfahren nach einem der Ansprüche 1 bis 4, wobei
eine Erlaubnisbedingung, die den Beginn des automatischen Fahrens entlang der Zielroute (R) zulässt, nachdem die Korrekturoperation in einem Nicht-Arbeitsbereich ausgeführt wurde, im Vergleich zu einer Erlaubnisbedingung in einem Arbeitsbereich gelockert wird.

7. Automatisches Fahrverfahren nach einem der Ansprüche 1 bis 4, wobei
wenn die Korrekturoperation innerhalb einer vorbestimmten Zeit nach dem Beginn des automatischen Fahrens des Arbeitsfahrzeugs (10) ausgeführt wird, das Arbeitsfahrzeug (10) während einer vorbestimmten Zeit angehalten wird, um vorbestimmte Warninformationen zu melden.

8. Automatisches Fahrverfahren nach einem der Ansprüche 1 bis 4, ferner umfassend:
Ausführen von Erkennen eines zu erkennenden Objekts in dem Arbeitsfeld (F), wobei
ein Erkennungsbereich zum Erkennen des zu erkennenden Objekts gemäß einer Fahrbedingung des Arbeitsfahrzeugs (10) eingestellt wird,
das Fahren des Arbeitsfahrzeugs (10) eingeschränkt wird, wenn das zu erkennende Objekt in einem Nicht-Arbeitsbereich erkannt wird, und
die Fahrt des Arbeitsfahrzeugs (10) nicht eingeschränkt wird, wenn das zu erkennende Objekt in einem Arbeitsbereich erkannt wird.

9. Automatisches Fahrverfahren nach einem der Ansprüche 1 bis 4, wobei
wenn bewirkt wird, dass das Arbeitsfahrzeug (10) automatisch fährt, während es eine vorbestimmte Arbeit auf einem zu bearbeitenden Objekt durchführt, das in einer Vielzahl von Reihen (Vr) in dem Arbeitsfeld (F) angeordnet ist,
in Routeninformationen einer Arbeitsroute (R1) der Zielroute (R), auf der das zu bearbeitende Objekt auf einer Seite des Arbeitsfahrzeugs (10) in der linken und der rechten Richtung vorhanden ist und kein zu bearbeitendes Objekt auf einer anderen Seite des Arbeitsfahrzeugs (10) in der linken und der rechten Richtung vorhanden ist, ein erster Schwellenwert als ein Schwellenwert des Verschiebungsbetrags eingestellt wird, welcher der einen Seite des Arbeitsfahrzeugs (10) entspricht, und ein zweiter Schwellenwert, der größer als der erste Schwellenwert ist, als der Schwellenwert des Verschiebungsbetrags eingestellt wird, welcher der anderen Seite des Arbeitsfahrzeugs (10) entspricht.

10. Automatisches Fahrprogrammprodukt, das eine oder mehrere Verarbeitungseinheiten (111, 112, 113, 211, 212, 213, 214) veranlasst, das automatische Fahrverfahren nach einem der Ansprüche 1 bis 4 auszuführen.

11. Automatisches Fahrsystem (1), umfassend:
eine Fahrverarbeitungseinheit (111), die dazu ausgestaltet ist, ein Arbeitsfahrzeug (10) zu veranlassen, automatisch entlang einer Zielroute (R) in einem Arbeitsfeld (F) zu fahren;
**dadurch gekennzeichnet, dass** das automatische Fahrsystem ferner eine Korrekturverarbeitungseinheit (113) umfasst, die dazu ausgestaltet ist, eine Korrekturoperation zum Korrigieren einer Abweichung unter Verwendung eines Verschiebungsbetrags des Arbeitsfahrzeugs (10) auszuführen, der in einer vergangenen Korrekturoperation erzeugt wurde, wenn die Abweichung, die mindestens eine Positionsabweichung oder eine Azimutabweichung des Arbeitsfahrzeugs (10) in Bezug auf die Zielroute (R) umfasst, einen Schwellenwert überschreitet.

12. Arbeitsfahrzeug (10), umfassend:
das automatische Fahrsystem (1) nach Anspruch 11; und
eine Fahrvorrichtung, die dazu ausgestaltet ist, durch das automatische Fahrsystem (1) gesteuert zu werden.

## Revendications

1. Procédé de déplacement automatique comprenant l'étape consistant à :
amener un véhicule de travail (10) à se déplacer automatiquement le long d'un itinéraire cible (R) dans un champ de travail (F) ; et
**caractérisé en ce que** le procédé de déplacement automatique comprend en outre l'étape consistant à exécuter une opération de correction pour corriger une déviation en utilisant une quantité de décalage du véhicule de travail (10) générée dans une opération de correction antérieure lorsque la déviation qui comprend au moins une déviation de position ou une déviation azimutale du véhicule de travail (10) par rapport à l'itinéraire cible (R) dépasse un seuil.

2. Procédé de déplacement automatique selon la revendication 1, dans lequel :
lorsque l'opération de correction est réalisée plusieurs fois successivement à un emplacement où la déviation dépasse le seuil, une opération de correction courante est exécutée en utilisant la quantité de décalage correspondant à l'opération de correction précédente.

3. Procédé de déplacement automatique selon la revendication 2, dans lequel :
lorsqu'une première quantité de décalage pendant la prise de virage du véhicule de travail (10) et qu'une seconde quantité de décalage lors du déplacement vers l'avant ou du déplacement vers l'arrière du véhicule de travail (10) dans une opération de correction précédente sont acquises, une position cible (X1, X2) est déterminée sur la base de la première quantité de décalage et de la seconde quantité de décalage lors de l'opération de correction courante, et le véhicule de travail (10) est déplacé dans la position cible (X1, X2).

4. Procédé de déplacement automatique selon la revendication 3, dans lequel :
un rapport de quantité de décalage qui est une quantité de décalage par angle de rotation est calculé sur la base de la première quantité de décalage et lors de l'opération de correction courante, la position cible (X1, X2) est déterminée en calculant une quantité de décalage pendant la prise de virage sur la base du rapport de quantité de décalage.

5. Procédé de déplacement automatique selon l'une quelconque des revendications 1 à 4, dans lequel :
l'opération de correction est arrêtée et le véhicule de travail (10) est arrêté lorsque le nombre d'exécutions de l'opération de correction atteint un nombre prédéterminé de fois ou bien lorsqu'un laps de temps prédéterminé s'est écoulé après que l'opération de correction a été démarrée.

6. Procédé de déplacement automatique selon l'une quelconque des revendications 1 à 4, dans lequel :
une condition de permission qui permet le démarrage de la conduite automatique le long de l'itinéraire cible (R) après que l'opération de correction a été réalisée dans une zone d'absence de travail est assouplie par rapport à une condition de permission dans une zone de travail.

7. Procédé de déplacement automatique selon l'une quelconque des revendications 1 à 4, dans lequel :
lorsque l'opération de correction est exécutée dans un laps de temps prédéterminé après que le déplacement automatique du véhicule de travail (10) a démarré, le véhicule de travail (10) est arrêté pendant un laps de temps prédéterminé pour signaler l'information d'avertissement prédéterminée.

8. Procédé de déplacement automatique selon l'une quelconque des revendications 1 à 4, comprenant en outre l'étape consistant à :
exécuter la détection d'un objet à détecter dans le champ de travail (F), dans lequel :
une plage de détection pour détecter l'objet à détecter est déterminée selon une condition de déplacement du véhicule de travail (10),
le déplacement du véhicule de travail (10) est limité lorsque l'objet à détecter est détecté dans une zone d'absence de travail, et
le déplacement du véhicule de travail (10) est illimité lorsque l'objet à détecter est détecté dans une zone de travail.

9. Procédé de déplacement automatique selon l'une quelconque des revendications 1 à 4, dans lequel :
lorsque le véhicule de travail (10) est fait pour se déplacer automatiquement tout en réalisant un travail prédéterminé sur un objet à travailler agencé dans une pluralité de rangées (Vr) dans le champ de travail (F),
dans l'information d'itinéraire d'un itinéraire de travail (R1) de l'itinéraire cible (R), dans lequel l'objet à travailler existe d'un côté du véhicule de travail (10) dans les directions gauche et droite et aucun objet à travailler n'existe de l'autre côté du véhicule de travail (10) dans les directions gauche et droite, un premier seuil est déterminé comme étant un seuil de la quantité de décalage correspondant au premier côté du véhicule de travail (10) et un second seuil supérieur au premier seuil est déterminé comme étant le seuil de la quantité de décalage correspondant à l'autre côté du véhicule de travail (10).

10. Produit de programme de déplacement automatique amenant une ou plusieurs unités de traitement (111, 112, 113, 211, 212, 213, 214) à exécuter le procédé de déplacement automatique selon l'une quelconque des revendications 1 à 4.

11. Système de déplacement automatique (1) comprenant :
une unité de traitement de déplacement (111) qui est configurée pour amener un véhicule de travail (10) à se déplacer automatiquement le long d'un itinéraire cible (R) dans un champ de travail (F);
**caractérisé en ce que** le système de déplacement automatique comprend en outre une unité de traitement de correction (113) qui est configurée pour exécuter une opération de correction pour corriger une déviation en utilisant une quantité de décalage du véhicule de travail (10) générée lors d'une opération de correction antérieure lorsque la déviation comprenant au moins une déviation de position ou bien une déviation azimutale du véhicule de travail (10) par rapport à l'itinéraire cible (R) dépasse un seuil.

12. Véhicule de travail (10) comprenant :
le système de déplacement automatique (1) selon la revendication 11 ; et
un dispositif de déplacement configuré pour être commandé par le système de déplacement automatique (1).
